# EUROPEAN PATENT APPLICATION

(11) **EP 4 694 265 A1**
(43) Date of publication of application: **11.02.2026**
(21) Application number: 24784262.8
(22) Date of filing: 02.04.2024
(51) Int. Cl.: H04W 12/106, H04W 12/03, H04L 9/40

(54) **COMMUNICATION METHOD AND COMMUNICATION APPARATUS**

(30) Priority: 07.04.2023 CN 202310385227
(71) Applicant: Huawei Technologies Co., Ltd., Shenzhen, Guangdong 518129 (CN)
(72) Inventor: GUO, Longhua, Shenzhen, Guangdong 518129 (CN); LEI, Ao, Shenzhen, Guangdong 518129 (CN); WU, Rong, Shenzhen, Guangdong 518129 (CN); ZHOU, Runze, Shenzhen, Guangdong 518129 (CN)
(74) Representative: Pfenning, Meinig & Partner mbB
(86) International application number: PCT/CN2024/085458
(87) International publication number: WO 2024/208178

(57) **Abstract**

Embodiments of this application provide a communication method and apparatus. The method includes: A first communication apparatus obtains a security policy corresponding to a proximity-based services group; determines, according to the security policy, whether to perform security protection on a payload field carried in a first message, and assigns a value to a field other than the payload field in the first message; and sends the first message to a second communication apparatus. The field other than the payload field includes at least one of the following: an identifier of a proximity-based services group key, an identifier of a proximity-based services group traffic key, a freshness parameter, confidentiality indication information, integrity indication information, or a message authentication code. The confidentiality indication information indicates whether confidentiality security protection is enabled, and the integrity indication information indicates whether integrity security protection is enabled. The first communication apparatus is one of at least two members in the proximity-based services group. The technical solutions of this application can prevent the second communication apparatus from being spoofed, and reduce potential security risks.

## Description

This application claims priority to Chinese Patent Application No. 202310385227.1, filed with the China National Intellectual Property Administration on April 7, 2023 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

In communication systems, for example, a 5th generation (5th generation, 5G) communication system, with rapid development of mobile communication, widespread use of new types of data services, for example, video chat, virtual reality (Virtual Reality, VR), and augmented reality (Augmented Reality, AR), raises users' requirements on communication. For example, device-to-device communication allows direct communication between user equipments (user equipment, UE), effectively enhancing communication efficiency especially in a one-to-many scenario.

However, current communication between devices may compromise network security due to malicious alterations by attackers. Therefore, there is an urgent need for additional measures to reduce potential security risks.

### SUMMARY

This application provides a communication method and a communication apparatus, to reduce a potential security risk and improve network communication security.

According to a first aspect, a communication method is provided. The method may be performed by a first communication apparatus (for example, transmitter UE), or may be performed by a chip or a circuit of the first communication apparatus. This is not limited in this application. For ease of description, an example in which the method is performed by the first communication apparatus is used below for description.

Optionally, the first communication apparatus and a second communication apparatus in this embodiment of this application may be terminal devices, for example, a mobile phone, a vehicle, an uncrewed aerial vehicle, or a wearable device, or may be chips in the terminal device. In addition, the terminal device may also be referred to as user equipment. Therefore, the communication apparatus may also be user equipment or a chip in the user equipment. This is not specifically limited in this application.

The method includes: A first communication apparatus obtains a security policy corresponding to a proximity-based services group; determines, according to the security policy, whether to perform security protection on a payload field carried in a to-be-sent first message, and assigns a value to a field other than the payload field in the first message; and sends the first message to a second communication apparatus. The security policy includes a confidentiality security policy and/or an integrity security policy, the confidentiality security policy indicates whether confidentiality security protection is enabled for a message of the proximity-based services group, the integrity security policy indicates whether integrity security protection is enabled for the message of the proximity-based services group, the proximity-based services group includes at least two members, and the first communication apparatus is one of the at least two members. The field other than the payload field includes one or more of the following: an identifier of a proximity-based services group key, an identifier of a proximity-based services group traffic key, a freshness parameter, confidentiality indication information, integrity indication information, or a message authentication code MAC, where the confidentiality indication information indicates whether the confidentiality security protection is enabled, the integrity indication information indicates whether the integrity security protection is enabled, and the security protection includes the confidentiality security protection and/or the integrity security protection.

According to the solution provided in this application, a format of the first message is redefined, including the payload field and the field other than the payload field, whether to perform security protection on the payload field is determined according to the security policy corresponding to the proximity-based services group, and the value is assigned to the field other than the payload field. In addition, the identifier of the proximity-based services group key, the identifier of the proximity-based services group traffic key, the freshness parameter, and the confidentiality indication information are decoupled. This can avoid a case in which integrity check fails in a scenario in which the security policy is that confidentiality is not required but integrity is required, improve network communication security, and reduce a potential security risk.

With reference to the first aspect, in some implementations of the first aspect, assigning the value to the field other than the payload field in the first message includes: When the confidentiality security policy indicates that the confidentiality security protection is not enabled, but the integrity security policy indicates that the integrity security protection is enabled, the first communication apparatus sets the MAC not to be 0, and sets at least one of the identifier of the proximity-based services group key, the identifier of the proximity-based services group traffic key, and the freshness parameter not to be 0.

Based on the foregoing solution, when the confidentiality security policy indicates that the confidentiality security protection is not enabled, but the integrity security policy indicates that the integrity security protection is enabled, the MAC is set not to be 0, and the at least one of the identifier of the proximity-based services group key, the identifier of the proximity-based services group traffic key, and the freshness parameter is set not to be 0. This can avoid a case in which receiver UE cannot perform integrity check or integrity check fails subsequently, can prevent the receiver UE from being spoofed, ensure communication security, and reduce a potential security risk of a network.

With reference to the first aspect, in some implementations of the first aspect, assigning the value to the field other than the payload field in the first message includes: When the confidentiality security policy indicates that the confidentiality security protection is not enabled, but the integrity security policy indicates that the integrity security protection is enabled, the first communication apparatus sets the confidentiality indication information to be 0.

Based on the foregoing solution, when the confidentiality security policy indicates that the confidentiality security protection is not enabled, but the integrity security policy indicates that the integrity security protection is enabled, the MAC is set not to be 0, and the confidentiality indication information is set to be 0. This can avoid the case in which the receiver UE cannot perform integrity check or the integrity check fails subsequently, can prevent the receiver UE from being spoofed, ensure the communication security, and reduce the potential security risk of the network.

In this embodiment of this application, whether values of the identifier of the proximity-based services group key, the identifier of the proximity-based services group traffic key, and the freshness parameter in the first message are 0 is no longer completely bound to whether the confidentiality security protection is enabled. In other words, when the confidentiality security protection is not enabled (or disabled), the confidentiality indication information may be used for indication or determining. Correspondingly, the values of the identifier of the proximity-based services group key, the identifier of the proximity-based services group traffic key, and the freshness parameter may be 0 or may be not 0. This is not specifically limited in this application. When the confidentiality security protection is enabled, the confidentiality indication information may also be used for indication or determining. In this case, the values of the identifier of the proximity-based services group key, the identifier of the proximity-based services group traffic key, and the freshness parameter may be not 0.

With reference to the first aspect, in some implementations of the first aspect, that the first communication apparatus determines, according to the security policy, whether to perform security protection on the payload field carried in the to-be-sent first message, and assigns the value to the field other than the payload field in the first message includes: When the confidentiality security policy indicates that the confidentiality security protection is enabled, the first communication apparatus determines to perform confidentiality security protection on the payload field carried in the to-be-sent first message, and sets a value of at least one of the identifier of the proximity-based services group key, the identifier of the proximity-based services group traffic key, the freshness parameter, and the confidentiality indication information that are carried in the first message not to be 0.

Based on the foregoing solution, when the confidentiality security policy indicates that the confidentiality security protection is enabled, the first communication apparatus sets the value of the at least one of the identifier of the proximity-based services group key, the identifier of the proximity-based services group traffic key, the freshness parameter, and the confidentiality indication information that are carried in the first message not to be 0.

With reference to the first aspect, in some implementations of the first aspect, that the first communication apparatus determines, according to the security policy, whether to perform security protection on the payload field carried in the to-be-sent first message, and assigns the value to the field other than the payload field in the first message includes: When the integrity security policy indicates that the integrity security protection is enabled, the first communication apparatus determines to perform integrity security protection on the payload field carried in the to-be-sent first message, and sets a value of the MAC carried in the first message not to be 0.

Based on the foregoing solution, when the integrity security policy indicates that the integrity security protection is enabled, the first communication apparatus sets the value of the MAC carried in the first message not to be 0.

With reference to the first aspect, in some implementations of the first aspect, that the first communication apparatus determines, according to the security policy, whether to perform security protection on the payload field carried in the to-be-sent first message, and assigns the value to the field other than the payload field in the first message includes: When the confidentiality security policy indicates that the confidentiality security protection is not enabled, the first communication apparatus determines not to perform confidentiality security protection on the payload field carried in the to-be-sent first message, and sets a value of at least one of the identifier of the proximity-based services group key, the identifier of the proximity-based services group traffic key, the freshness parameter, and the confidentiality indication information that are carried in the first message to be 0.

Based on the foregoing solution, when the confidentiality security policy indicates that the confidentiality security protection is not enabled, the first communication apparatus sets the value of the at least one of the identifier of the proximity-based services group key, the identifier of the proximity-based services group traffic key, the freshness parameter, and the confidentiality indication information that are carried in the first message to be 0.

With reference to the first aspect, in some implementations of the first aspect, that the first communication apparatus determines, according to the security policy, whether to perform security protection on the payload field carried in the to-be-sent first message, and assigns the value to the field other than the payload field in the first message includes: When the integrity security policy indicates that the integrity security protection is not enabled, the first communication apparatus determines not to perform integrity security protection on the payload field carried in the to-be-sent first message, and sets a value of the MAC carried in the first message to be 0.

Based on the foregoing solution, when the integrity security policy indicates that the integrity security protection is not enabled, the first communication apparatus sets the value of the MAC carried in the first message to be 0.

With reference to the first aspect, in some implementations of the first aspect, that the first communication apparatus determines, according to the security policy, whether to perform security protection on the payload field carried in the to-be-sent first message, and assigns the value to the field other than the payload field in the first message includes: The first communication apparatus determines, according to a local policy and the security policy, to perform security protection on the payload field carried in the first message, and assigns the value to the field other than the payload field in the first message, where the local policy indicates a trigger condition for the first communication apparatus to perform security protection on the payload field.

With reference to the first aspect, in some implementations of the first aspect, that the first communication apparatus determines, according to the local policy and the security policy, to perform security protection on the payload field, and assigns the value to the field other than the payload field in the first message includes: When the security policy indicates that the security protection is optionally enabled, the first communication apparatus determines, according to the local policy, to perform security protection on the payload field, and assigns the value to the field other than the payload field in the first message.

Based on the foregoing solution, when the security policy indicates that the security protection is optionally enabled, the first communication apparatus determines, according to the local policy, to perform security protection on the payload field, and assigns the value to the field other than the payload field in the first message.

With reference to the first aspect, in some implementations of the first aspect, that the first communication apparatus determines, according to the local policy and the security policy, to perform security protection on the payload field, and assigns the value to the field other than the payload field in the first message includes: When the confidentiality security policy indicates that the confidentiality security protection is optionally enabled, and a type of the first communication apparatus is a roadside unit, the first communication apparatus determines not to perform confidentiality security protection on the payload field, and sets a value of the confidentiality indication information carried in the field other than the payload field to be 0, or sets the at least one of the identifier of the proximity-based services group key, the identifier of the proximity-based services group traffic key, and the freshness parameter to be 0.

Based on the foregoing solution, when the confidentiality security policy indicates that the confidentiality security protection is optionally enabled, and the type of the first communication apparatus is the roadside unit, the first communication apparatus sets the value of the confidentiality indication information carried in the field other than the payload field to be 0, or sets the at least one of the identifier of the proximity-based services group key, the identifier of the proximity-based services group traffic key, and the freshness parameter to be 0.

With reference to the first aspect, in some implementations of the first aspect, that the first communication apparatus determines, according to the local policy and the security policy, to perform security protection on the payload field, and assigns the value to the field other than the payload field in the first message includes: When the confidentiality security policy indicates that the confidentiality security protection is optionally enabled, and a type of the first communication apparatus is a vehicle, the first communication apparatus determines to perform confidentiality security protection on the payload field, and sets a value of the confidentiality indication information carried in the field other than the payload field not to be 0, or sets the at least one of the identifier of the proximity-based services group key, the identifier of the proximity-based services group traffic key, and the freshness parameter not to be 0.

Based on the foregoing solution, when the confidentiality security policy indicates that the confidentiality security protection is optionally enabled, and the type of the first communication apparatus is the vehicle, the first communication apparatus sets the value of the confidentiality indication information carried in the field other than the payload field not to be 0, or sets the at least one of the identifier of the proximity-based services group key, the identifier of the proximity-based services group traffic key, and the freshness parameter not to be 0.

With reference to the first aspect, in some implementations of the first aspect, that the first communication apparatus determines, according to the local policy and the security policy, to perform security protection on the payload field, and assigns the value to the field other than the payload field in the first message includes: When the integrity security policy indicates that the integrity security protection is optionally enabled, and types of the at least two members in the proximity-based services group are roadside units, the first communication apparatus determines not to perform integrity security protection on the payload field, and sets the value of the MAC carried in the field other than the payload field to be 0.

Based on the foregoing solution, when the integrity security policy indicates that the integrity security protection is optionally enabled, and the types of the at least two members in the proximity-based services group are the roadside units, the first communication apparatus determines not to perform integrity security protection on the payload field, and sets the value of the MAC carried in the field other than the payload field to be 0.

With reference to the first aspect, in some implementations of the first aspect, that the first communication apparatus determines, according to the local policy and the security policy, to perform security protection on the payload field, and assigns the value to the field other than the payload field in the first message includes: When the integrity security policy indicates that the integrity security protection is optionally enabled, and types of the at least two members in the proximity-based services group are vehicles, the first communication apparatus determines to perform integrity security protection on the payload field, and sets the value of the MAC carried in the field other than the payload field not to be 0.

Based on the foregoing solution, when the integrity security policy indicates that the integrity security protection is optionally enabled, and the types of the at least two members in the proximity-based services group are the vehicles, the first communication apparatus determines to perform integrity security protection on the payload field, and sets the value of the MAC carried in the field other than the payload field not to be 0.

With reference to the first aspect, in some implementations of the first aspect, that the first communication apparatus determines, according to the security policy, whether to perform security protection on the payload field carried in the to-be-sent first message, and assigns the value to the field other than the payload field in the first message includes: When the confidentiality security policy indicates that the confidentiality security protection is not enabled, and the integrity security policy indicates that the integrity security protection is not enabled, the first communication apparatus sets at least one of the identifier of the proximity-based services group key, the identifier of the proximity-based services group traffic key, and the freshness parameter not to be 0.

With reference to the first aspect, in some implementations of the first aspect, the confidentiality indication information is carried in an information header of a packet data convergence protocol PDCP data packet of the first communication apparatus.

With reference to the first aspect, in some implementations of the first aspect, that the first communication apparatus obtains the security policy corresponding to the proximity-based services group includes: The first communication apparatus sends a request message to a key management function network element, where the request message includes a group identifier of the proximity-based services group and a security capability of the first communication apparatus, and the request message is used to request to obtain the security policy associated with the group identifier; and the first communication apparatus receives the security policy from the key management function network element.

Optionally, the security policy is preconfigured.

According to a second aspect, a communication method is provided. The method may be performed by a second communication apparatus (for example, receiver UE), or may be performed by a chip or a circuit of the second communication apparatus. This is not limited in this application. For ease of description, an example in which a second communication apparatus performs the method is used below for description.

The method includes: A second communication apparatus receives a first message from a first communication apparatus, where the first message includes a payload field and field other than the payload field; and the second communication apparatus determines, according to a security policy corresponding to a proximity-based services group, whether to perform security deprotection on the payload field. The field other than the payload field includes one or more of the following: an identifier of a proximity-based services group key, an identifier of a proximity-based services group traffic key, a freshness parameter, confidentiality indication information, integrity indication information, or a message authentication code MAC, where the confidentiality indication information indicates whether confidentiality security protection is enabled, and the integrity indication information indicates whether integrity security protection is enabled. The security policy includes a confidentiality security policy and/or an integrity security policy, the confidentiality security policy indicates whether the confidentiality security protection is enabled for a message of the proximity-based services group, the integrity security policy indicates whether the integrity security protection is enabled for the message of the proximity-based services group, the proximity-based services group includes at least two members, the second communication apparatus is one of the at least two members, and the security deprotection includes decryption and/or integrity check.

According to the solution provided in this application, a format of the first message is redefined, including the payload field and the field other than the payload field, whether to perform security protection on the payload field is determined according to the security policy corresponding to the proximity-based services group, and the value is assigned to the field other than the payload field. In addition, the identifier of the proximity-based services group key, the identifier of the proximity-based services group traffic key, the freshness parameter, and the confidentiality indication information are decoupled. This can avoid a case in which integrity check fails in a scenario in which the security policy is that confidentiality is not required but integrity is required, improve network communication security, and reduce a potential security risk.

With reference to the second aspect, in some implementations of the second aspect, that the second communication apparatus determines, according to the security policy corresponding to the proximity-based services group, whether to perform security deprotection on the payload field includes: When the confidentiality security policy indicates that the confidentiality security protection is enabled, the second communication apparatus determines to decrypt the payload field; and/or when the integrity security policy indicates that the integrity security protection is enabled, the second communication apparatus determines to perform integrity check on the payload field.

With reference to the second aspect, in some implementations of the second aspect, that the second communication apparatus determines, according to the security policy corresponding to the proximity-based services group, whether to perform security deprotection on the payload field includes: When the confidentiality security policy indicates that the confidentiality security protection is not enabled, the second communication apparatus determines not to decrypt the payload field; and/or when the integrity security policy indicates that the integrity security protection is not enabled, the second communication apparatus determines not to perform integrity check on the payload field.

With reference to the second aspect, in some implementations of the second aspect, that the second communication apparatus determines, according to the security policy corresponding to the proximity-based services group, whether to perform security deprotection on the payload field includes: The second communication apparatus determines, according to the security policy and the field other than the payload field, whether to perform security deprotection on the payload field.

With reference to the second aspect, in some implementations of the second aspect, that the second communication apparatus determines, according to the security policy and the field other than the payload field, whether to perform security deprotection on the payload field includes: When the integrity security policy indicates that the integrity security protection is enabled, and the field other than the payload field does not carry the MAC or a value of the MAC carried in the field other than the payload field is 0, the second communication apparatus determines that the integrity check on the payload field fails, or the second communication apparatus discards the first message.

With reference to the second aspect, in some implementations of the second aspect, that the second communication apparatus determines, according to the security policy and the field other than the payload field, whether to perform security deprotection on the payload field includes: When the integrity security policy indicates that the integrity security protection is enabled, and the value of the MAC carried in the field other than the payload field is not 0, the second communication apparatus determines to perform integrity check on the payload field.

With reference to the second aspect, in some implementations of the second aspect, that the second communication apparatus determines, according to the security policy and the field other than the payload field, whether to perform security deprotection on the payload field includes: When the integrity security policy indicates that the integrity security protection is not enabled, and the value of the MAC carried in the field other than the payload field is not 0, the second communication apparatus determines not to perform integrity check on the payload field.

With reference to the second aspect, in some implementations of the second aspect, that the second communication apparatus determines, according to the security policy and the field other than the payload field, whether to perform security deprotection on the payload field includes: When the integrity security policy indicates that the integrity security protection is not enabled, and the field other than the payload field does not carry the MAC or the value of the MAC carried in the field other than the payload field is 0, the second communication apparatus determines not to perform integrity check on the payload field.

With reference to the second aspect, in some implementations of the second aspect, that the second communication apparatus determines, according to the security policy and the field other than the payload field, whether to perform security deprotection on the payload field includes: When the integrity security policy indicates that the integrity security protection is optionally enabled, and the value of the MAC carried in the field other than the payload field is not 0, the second communication apparatus determines to perform integrity check on the payload field.

With reference to the second aspect, in some implementations of the second aspect, that the second communication apparatus determines, according to the security policy and the field other than the payload field, whether to perform security deprotection on the payload field includes: When the integrity security policy indicates that the integrity security protection is optionally enabled, and the field other than the payload field does not carry the MAC or the value of the MAC carried in the field other than the payload field is 0, the second communication apparatus determines not to perform security protection on the payload field.

With reference to the second aspect, in some implementations of the second aspect, that the second communication apparatus determines, according to the security policy and the field other than the payload field, whether to perform security deprotection on the payload field includes: When the confidentiality security policy indicates that the confidentiality security protection is not enabled, and a value of at least one of the identifier of the proximity-based services group key, the identifier of the proximity-based services group traffic key, and the freshness parameter that are carried in the field other than the payload field is not 0, the second communication apparatus determines not to decrypt the payload field.

With reference to the second aspect, in some implementations of the second aspect, that the second communication apparatus determines, according to the security policy and the field other than the payload field, whether to perform security deprotection on the payload field includes: When the confidentiality security policy indicates that the confidentiality security protection is not enabled, and the confidentiality indication information carried in the field other than the payload field indicates that the confidentiality security protection is enabled, the second communication apparatus determines not to decrypt the payload field.

With reference to the second aspect, in some implementations of the second aspect, that the second communication apparatus determines, according to the security policy and the field other than the payload field, whether to perform security deprotection on the payload field includes: When the confidentiality security policy indicates that the confidentiality security protection is enabled, and the confidentiality indication information indicates that the confidentiality security protection is not enabled, the second communication apparatus determines to decrypt the payload field.

With reference to the second aspect, in some implementations of the second aspect, that the second communication apparatus determines, according to the security policy and the field other than the payload field, whether to perform security deprotection on the payload field includes: When the confidentiality security policy indicates that the confidentiality security protection is optionally enabled, and the confidentiality indication information indicates that the confidentiality security protection is not enabled, the second communication apparatus determines not to decrypt the payload field.

With reference to the second aspect, in some implementations of the second aspect, that the second communication apparatus determines, according to the security policy and the field other than the payload field, whether to perform security deprotection on the payload field includes: When the confidentiality security policy indicates that the confidentiality security protection is optionally enabled, and the confidentiality indication information indicates that the confidentiality security protection is enabled, the second communication apparatus determines to decrypt the payload field.

With reference to the second aspect, in some implementations of the second aspect, the confidentiality indication information is carried in an information header of a packet data convergence protocol PDCP data packet of the first communication apparatus.

With reference to the second aspect, in some implementations of the second aspect, that the second communication apparatus obtains the security policy corresponding to the proximity-based services group is specifically: The second communication apparatus sends a request message to a key management function network element, where the request message includes a group identifier of the proximity-based services group and a security capability of the second communication apparatus, and the request message is used to request to obtain the security policy associated with the group identifier; and the second communication apparatus receives the security policy from the key management function network element.

Optionally, the security policy is preconfigured.

For beneficial effect of the second aspect and some implementations of the second aspect, correspondingly refer to the related descriptions of the first aspect. Details are not described herein again.

According to a third aspect, a first communication apparatus is provided, for example, transmitter UE. The apparatus includes an obtaining unit, configured to obtain a security policy corresponding to a proximity-based services group, where for example, the obtaining unit may be a transceiver unit, configured to receive the security policy from a network side; and a processing unit, configured to: determine, according to the security policy, whether to perform security protection on a payload field carried in a to-be-sent first message, and assign a value to a field other than the payload field in the first message. The first communication apparatus sends the first message to a second communication apparatus. The security policy includes a confidentiality security policy and/or an integrity security policy, the confidentiality security policy indicates whether confidentiality security protection is enabled for a message of the proximity-based services group, the proximity-based services group includes at least two members, and the first communication apparatus is one of the at least two members. The field other than the payload field includes one or more of the following: an identifier of a proximity-based services group key, an identifier of a proximity-based services group traffic key, a freshness parameter, confidentiality indication information, or a message authentication code MAC, where the confidentiality indication information indicates whether the confidentiality security protection is enabled, and the security protection includes the confidentiality security protection and/or the integrity security protection.

The transceiver unit may perform receiving and sending in the first aspect, and the processing unit may perform processing other than receiving and sending in the first aspect.

According to a fourth aspect, a second communication apparatus is provided, for example, receiver UE. The apparatus includes a transceiver unit, configured to receive a first message from a first communication apparatus, where the first message includes a payload field and field other than the payload field; and a processing unit, configured to determine, according to a security policy corresponding to a proximity-based services group, whether to perform security deprotection on the payload field. The field other than the payload field includes one or more of the following: an identifier of a proximity-based services group key, an identifier of a proximity-based services group traffic key, a freshness parameter, confidentiality indication information, or a message authentication code MAC, where the confidentiality indication information indicates whether confidentiality security protection is enabled. The security policy includes a confidentiality security policy and/or an integrity security policy, the confidentiality security policy indicates whether the confidentiality security protection is enabled for a message of the proximity-based services group, the proximity-based services group includes at least two members, the second communication apparatus is one of the at least two members, and the security deprotection includes decryption and/or integrity check.

The transceiver unit may perform receiving and sending in the second aspect, and the processing unit may perform processing other than receiving and sending in the second aspect.

According to a fifth aspect, a communication apparatus is provided, including a transceiver, a processor, and a memory. The processor is configured to control the transceiver to send and receive a signal. The memory is configured to store a computer program. The processor is configured to invoke the computer program from the memory and run the computer program, to enable the communication apparatus to perform the method according to the first aspect or the second aspect and any possible implementation of the first aspect or the second aspect.

Optionally, there are one or more processors, and there are one or more memories.

Optionally, the memory may be integrated with the processor, or the memory and the processor are separately disposed.

Optionally, the communication apparatus further includes a transmitter machine (transmitter) and a receiver machine (receiver).

According to a sixth aspect, a communication system is provided, including one or more of the foregoing first communication apparatus, second communication apparatus, and key management function network element.

According to a seventh aspect, this application provides a computer-readable storage medium. The computer-readable storage medium stores a computer program or code. When the computer program or code is run on a computer, the computer is enabled to perform the method according to the first aspect or the second aspect and any possible implementation of the first aspect or the second aspect.

According to an eighth aspect, a chip is provided, including at least one processor. The at least one processor is coupled to a memory, the memory is configured to store a computer program, and the processor is configured to invoke the computer program from the memory and run the computer program, to enable a communication apparatus on which the chip system is installed to perform the method according to the first aspect or the second aspect and any possible implementation of the first aspect or the second aspect.

The chip may include an input circuit or interface configured to send information or data, and an output circuit or interface configured to receive information or data.

According to a ninth aspect, a computer program product is provided. The computer program product includes computer program code. When the computer program code is run by a communication apparatus, the communication apparatus is enabled to perform the method according to the first aspect or the second aspect and any possible implementation of the first aspect or the second aspect.

### BRIEF DESCRIPTION OF DRAWINGS

FIG. 1 is a diagram of a network architecture 100 to which embodiments of this application are applicable;
FIG. 2 is a schematic flowchart of a communication method 200 according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a diagram of a structure of a communication apparatus 1000 according to an embodiment of this application;
FIG. 9 is a diagram of a structure of a communication apparatus 2000 according to an embodiment of this application; and
FIG. 10 is a diagram of a structure of a chip system 3000 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

In a communication system, a part operated by an operator may be referred to as a public land mobile network (public land mobile network, PLMN), also known as an operator network or the like. The PLMN is a network established and operated by a government or an authorized operator to provide terrestrial mobile communication services for the public, primarily serving as a public network in which mobile network operators (mobile network operator, MNO) provide mobile broadband access services for users. The PLMN described in embodiments of this application may be specifically a network that meets 3GPP standard requirements, abbreviated as a 3GPP network. The 3GPP network usually includes but is not limited to a 5G network, a 4th generation (4th generation, 4G) mobile communication network, and another future communication system like a 6th generation (6th generation, 6G) network.

For ease of description, the 5G network is used as an example for description in embodiments of this application.

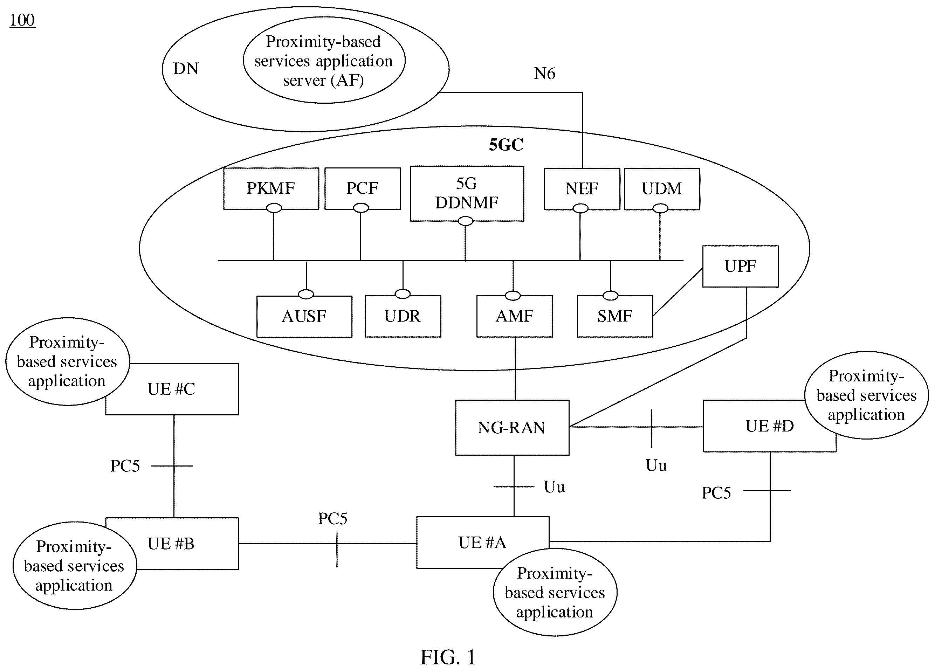

FIG. 1 is a diagram of a network architecture 100 to which embodiments of this application are applicable. As shown in FIG. 1, the network architecture may specifically include the following network elements:
1. User equipment (user equipment, UE) may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, an uncrewed aerial vehicle, a wearable device, a terminal device in a 5G network, a terminal device in an evolved PLMN, or the like. This is not limited in embodiments of this application. The UE may be connected to a next generation radio access network (next generation radio access network, NG-RAN) device through a Uu interface. For example, UE #A and UE #D shown in FIG. 1 are connected to an NG-RAN through Uu interfaces.
   Compared with that in conventional cellular network communication, UE supporting ProSe communication needs to have a proximity-based services application (proximity-based services application, ProSe application) function. Two UEs having the proximity-based services application ProSe application function may also be connected to each other through a PC5 interface. For example, as shown in FIG. 1, the UE #A and UE #B are connected to each other through a PC5 interface, the UE #B and UE #C are connected to each other through a PC5 interface, and the UE #A and the UE #D are connected to each other through a PC5 interface. For a plurality of terminal devices (for example, the UE #A, the UE #B, the UE #C, and the UE #D) in a same group, during message exchange, to ensure network communication security, transmitter UE usually performs security protection on the message. Correspondingly, after receiving the message, the receiver UE also performs security deprotection on the message, to avoid tampering of a malicious attacker. For example, the UE #A and the UE #D may separately request to obtain, from the operator network, a security parameter corresponding to the proximity-based services group. The UE #A performs security protection on a to-be-sent message based on the security parameter, and sends, to the UE #D, the security protected message. Correspondingly, after receiving the message, the UE #D performs security deprotection on the message based on the security parameter, to effectively ensure communication security.
2. An access network (access network, AN) provides a network access function for authorized users in a specific area, and can use transmission tunnels with different quality based on user levels, service requirements, and the like. The access network may be an access network using different access technologies. Current access network technologies include a radio access network technology used in a 3rd generation (3rd generation, 3G) system, a radio access network technology used in a 4G system, an NG-RAN technology shown in FIG. 1 (for example, a radio access technology used in a 5G system), or the like.
   An access network that implements an access network function based on a wireless communication technology may be referred to as a radio access network (radio access network, RAN). The radio access network can manage radio resources, provide an access service for terminals, and further complete forwarding of control signals and user data between terminals and core networks.
   The radio access network device may be, for example, a NodeB (NodeB), an evolved NodeB (evolved NodeB, eNB or eNodeB), a next generation node base station (next generation node base station, gNB) in a 5G mobile communication system, a base station in a mobile communication system, an access point (access point, AP) in a Wi-Fi wireless hotspot (Wi-Fi) system, or the like, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology used by the radio access network device and a specific device form are not limited in embodiments of this application.
3. An access management network element is mainly used for mobility management and access management, responsible for user policy transmission between the user equipment and a policy control function (policy control function, PCF) network element, and may be configured to implement functions other than session management in a mobility management entity (mobility management entity, MME) function, for example, an access authorization (authentication) function.
   An access and mobility management function (access and mobility management function, AMF) is configured to establish an NAS connection to UE, and has same 5G NAS security context as the UE. The 5G NAS security context includes an NAS hierarchy key, key identification information same as that of the NAS hierarchy key, a UE security capability, and uplink and downlink NAS COUNT values. The NAS hierarchy key includes an NAS encryption key and an NAS integrity security protection key respectively used for confidentiality security protection of an NAS message and integrity security protection of the NAS message.
   In a 5G communication system, the access management network element may be the AMF network element. In a future communication system, the access management network element may still be the AMF network element, or may have another name. This is not limited in this application.
4. The session management network element is mainly used for session management, user equipment internet protocol (internet protocol, IP) address allocation and management, selection and management of user plane functions, termination of interfaces towards policy control and charging functions, downlink data notification, and the like.
   In the 5G communication system, the session management network element may be a session management function (session management function, SMF) network element. In the future communication system, the session management network element may still be the SMF network element, or may have another name. This is not limited in this application.
5. A user plane network element is used for packet routing and forwarding, quality of service (quality of service, QoS) handling for user plane data, user plane data forwarding, session/flow-level charging statistics collection, bandwidth limiting function, and the like.
   In the 5G communication system, the user plane network element may be a user plane function (user plane function, UPF) network element. In the future communication system, the user plane network element may still be the UPF network element, or may have another name. This is not limited in this application.
6. A data network element is a network for data transmission.
   In the 5G communication system, the data network element may be a DN network element. In the future communication system, the data network element may still be the DN element, or may have another name. This is not limited in this application.
7. A policy control network element supports a unified policy framework for network to govern behavior, provides policy rule information for control plane function network elements (for example, the AMF network element and the SMF network element), and the like.
   In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be the PCF network element, or may have another name. This is not limited in this application.
8. A data management network element is configured to perform user equipment identification handling, access authentication, registration, mobility management, and the like.
   In the 5G communication system, the data management network element may be a unified data management (unified data management, UDM) network element. In the 4G communication system, the data management network element may be a home subscriber server (home subscriber server, HSS) network element. In the future communication system, the data management network element may still be the UDM network element, or may have another name. This is not limited in this application.
9. A data repository network element is responsible for storage and retrieval of subscription data, policy data, application data and other types of data.
   In the 5G communication system, the data repository network element may be a unified data repository (unified data repository, UDR) network element. In the future communication system, the data repository network element may still be the UDR network element, or may have another name. This is not limited in this application.
10. A network exposure function (network exposure function, NEF) entity is used to securely expose services and capabilities provided by 3GPP network functions.
11. A ProSe application server (application server, AS) may be an application function (application function, AF) of a DN, or may be an AS that provides a ProSe service. An AF having the ProSe application server function has all functions of the AF defined in Release 23.501 R15 and related functions used for a ProSe service. In other words, in a user plane architecture, the ProSe application server performs user plane communication with UE through a UE-RAN-UPF-AF path. The ProSe application server may alternatively communicate with another network function (network function, NF) in a 5G core network (5G core network, 5GC) via an NEF in a control plane architecture, for example, communicate with the PCF via the NEF. If the ProSe application server is an AF of the DN, and the AF is deployed by an operator of the 5GC, the ProSe application server may alternatively directly communicate with another NF in the 5GC without via an NEF in a control plane architecture, for example, directly communicate with the PCF.
12. A 5G direct discovery name management function (direct discovery name management function, DDNMF) has a function of allocating and processing a mapping relationship between a proximity-based services application identifier (ProSe application identifier) and a proximity-based services application code (ProSe application code) for open proximity-based services discovery (open ProSe discovery). In restricted proximity-based services discovery (restricted ProSe direct discovery), the 5G DDNMF may communicate with a proximity-based services application server through a PC2 interface, to process authorization of a discovery request (discovery request), and also have a function of not allocating or processing a mapping relationship between an application identifier (application identifier) and codes used in restricted proximity-based services, where the codes used in the restricted proximity-based services include a proximity-based services restricted code (ProSe restricted code), a proximity-based services query code (ProSe query code), and a proximity-based services response code (ProSe response code).
   In the current standard definition, the 5G DDNMF is at a PLMN granularity, meaning that there is only one 5G DDNMF per PLMN. The 5G DDNMF may be uniquely determined based on a mobile country code (mobile country code, MCC) and a mobile network code (mobile network code, MNC).
13. An authentication server function (authentication server function, AUSF) may perform authentication and/or authorization on the subscriber based on authentication information and/or authorization information stored in the UDM, or generate authentication and/or authorization information of the subscriber via the UDM, after receiving an authentication request initiated by a subscriber. The AUSF may feed back the authentication information and/or the authorization information to the subscriber.
14. A proximity-based services key management function (ProSe key management function, PKMF) may be responsible for generating and distributing, for UE that uses proximity-based services, a key used for a PC5 interface connection. The UE needs to interact with a KMF via a control plane, to obtain the key used for the PC5 interface. For ease of description, the PKMF may be replaced with the KMF in embodiments of this application.
15. A proximity-based services anchor function (ProSe Anchor Function, PAnF) network element is configured to store ProSe security context of UE and a 5GPRUK key, for the PAnF to retrieve an associated 5GPRUK based on the 5GPRUK ID after receiving a key obtaining request from the AUSF.

In the network architecture shown in FIG. 1, the network elements may communicate with each other through the illustrated interfaces. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for transmitting user plane data and the like. The SMF and the UPF may interact with each other through an N4 interface, and the N4 interface may be for transmitting information such as tunnel identification information of an N3 connection, data buffering indication information, and a downlink data notification message. The UPF and the DN may interact with each other through an N6 interface, and the N6 interface may be for transmitting user plane data and the like. Relationships between other interfaces and the network elements are shown in FIG. 1. For brevity, details are not described herein.

It should be understood that the network architecture applied to embodiments of this application is merely an example of a network architecture described from a perspective of a service-based architecture, and a network architecture applicable to embodiments of this application is not limited thereto. Embodiments of this application are applicable to any network architecture that can implement functions of the network elements. For example, in some network architectures, network function network element entities such as an AMF, an SMF network element, a PCF network element, and a UDM network element are all referred to as network function NF network elements. Alternatively, in some other network architectures, a set of network elements such as an AMF, an SMF network element, a PCF network element, and a UDM network element may be referred to as control plane function network elements. Because UE needs to interact with the KMF and the DDNMF via the user plane, network elements such as the KMF and the DDNMF may be referred to as user plane network elements.

It should be further understood that the AMF, the SMF, the UPF, the NEF, the AUSF, the NRF, the PCF, the UDM, and the like shown in FIG. 1 may be understood as network elements configured to implement different functions in a core network, for example, may be combined as required to form a network slice. These network elements of the core network may be independent devices, or may be integrated into a same device to implement different functions. A specific form of the network elements is not limited in this application.

It should be further understood that the names are defined merely for ease of distinguishing between different functions, and should not constitute any limitation on this application. This application does not exclude a possibility that another name is used in the 5G network and another future network. For example, in the 6G network, some or all of the network elements may still use terms in 5G, or may use other names. The names of the interfaces between the network elements in FIG. 1 are merely examples, and the interfaces may have other names during specific implementation. This is not specifically limited in this application. In addition, names of messages (or signaling) transmitted between the network elements are also merely examples, and do not constitute any limitation on functions of the messages.

With rapid development of mobile communication, widespread use of new types of data services, for example, video services and virtual reality (virtual reality, VR)/augmented reality (augmented reality, AR) raises users' requirements on bandwidth. The technical solutions of this application are mainly applicable to a D2D communication scenario. The scenario may be ProSe service, V2X service, or angle measurement or ranging service (namely, a ranging service). The network element and a key name provided in this application do not constitute any limitation on the service scenario. D2D communication allows direct communication between UEs, and the UEs may share spectrum resources with cell users under control of a cell network, so that utilization of the spectrum resources is effectively improved. The D2D communication includes one-to-many communication (one-to-many communication) and one-to-one communication (one-to-one communication). The one-to-many communication corresponds to multicast and broadcast communication, and the one-to-one communication corresponds to unicast communication. To implement security of the one-to-many communication, the UE side stores a plurality of keys. Specific descriptions of some keys are provided below.

Compared with that in the conventional cellular network communication, the UE that can be used for the ProSe communication needs to have the ProSe application (proximity-based services application) function. UEs having the ProSe application function communicate with each other through the PC5 interface, and may be configured to transmit information on a data plane and a signaling plane. The proximity-based services application server (ProSe Application Server) corresponds to the ProSe application, and the ProSe application server may be the application function AF of the DN. An AF having the ProSe application server function has all the functions of the AF defined in Release 23.501 R-15 and the related function used for the ProSe service.

The following briefly describes some network elements and keys in this application.
(1) A key management function KMF stores a security algorithm at a group granularity and group member information based on a local configuration. The KMF is used to manage a group key, and UE may interact with the KMF over a user plane channel. For example, the KMF may be a logical network element, and is integrated with another network element. For example, the KMF may alternatively be a positioning management network element.
(2) A network management function stores address information of the KMF, and is used to manage a group identifier. The network management function stores group member information, and is used to perform authorization. The network management function and the KMF may be an integrated network element, or may be independent network elements. This is not limited in this application.
(3) A proximity-based services multimedia internet key (ProSe MIKEY Key, PMK) is used to protect security of a MIKEY message. For ease of description, the PMK may be replaced with the KMF in embodiments of this application. The key is a key at a UE granularity, and may be preconfigured and stored in the UE and the KMF, or may be sent by the key management function KMF to the UE over a secure transmission channel. The KMF is identified by a KMF ID. For example, the KMF ID is of 64 bits.
(4) A proximity-based services group key (ProSe Group Key, PGK) is a key at a group granularity, which is bound to a specific group. A group identifier is used to identify information about a group to which UE belongs. The PGK is associated with the group identifier and a PGK ID. For example, the group identifier may be a layer-2 group identifier, or may be a group identifier carried at a packet data convergence protocol PDCP layer. This is not limited in this application. For example, the PGK ID may be 8-bit identification information. The PGK is sent by the key management function KMF to the UE, and the KMF protects security of a message carrying the PGK.
(5) A proximity-based services traffic key (ProSe Traffic Key, PTK) is a key at a UE granularity, and the PTK is uniquely identified by a group identifier, the PGK ID, a group member identifier (group member ID), and a PTK identifier (PTK ID). An input key for deriving the PTK is the PGK, and input parameters include a group member ID of the UE and the PTK identifier. The group member ID is a unique identifier used to identify the UE in the group. For example, the group member ID may be of 24 bits. For example, the PTK ID may be a 16-bit counter, and the PTK ID monotonically increases each time a new PTK is generated.
   For example, when the PTK is calculated from the PGK, the following parameters should be used to form an input S of a key derivation function (key derivation function, KDF) specified in TS 33.220:
   - FC = 0x4A;
   - P0 = Group member identity (which may be, for example, a layer-2 source address of transmitter UE);
   - L0 = Length of a group member identifier (for example, may be 0x00 0x03);
   - P1 = PTK identifier;
   - L1 = Length of a PTK identity (for example, may be 0x00 0x02);
   - P2 = Group identifier; and
   - L2 = Length of the group identifier (for example, may be 0x00 0x03).
   The input key should be a 256-bit PGK.
(6) A proximity-based services encryption key (ProSe Encryption Key, PEK) is used to perform confidentiality security protection on broadcast data. The PTK is a key at a UE granularity, an input key for deriving the PEK is the PTK, and input parameters include a constant and a confidentiality algorithm ID that are marked for calculating the PEK.
(7) A proximity-based services integrity key (ProSe Integrity Key, PIK) is used to perform integrity security protection on broadcast data. The PIK is a key at a UE granularity, an input key for deriving the PIK is the PTK, and input parameters include a constant and an integrity algorithm ID that are marked for calculating the PIK.

For example, when the PEK or the PIK is calculated from the PTK or KD-sess, the following parameters should be used to form the input S of the KDF specified in TS 33.220:
- FC = 0x4B;
- P0 = 0x00, which is used for deriving the PEK, where 0x01 is used for deriving the PIK;
- L0 = Length of P0 (for example, may be 0x00 0x01);
- P1 = Algorithm identifier, which should be set as specified in TS 33.401 [21]; and
- L1 = Length of the algorithm identifier (namely, 0x00 0x01).

The input key should be a 256-bit PTK or 256-bit KD-sess.

For an algorithm key with a length of n bits, where n is less than or equal to 256, n least significant bits of the 256 bits output by the KDF should be used as the algorithm key.

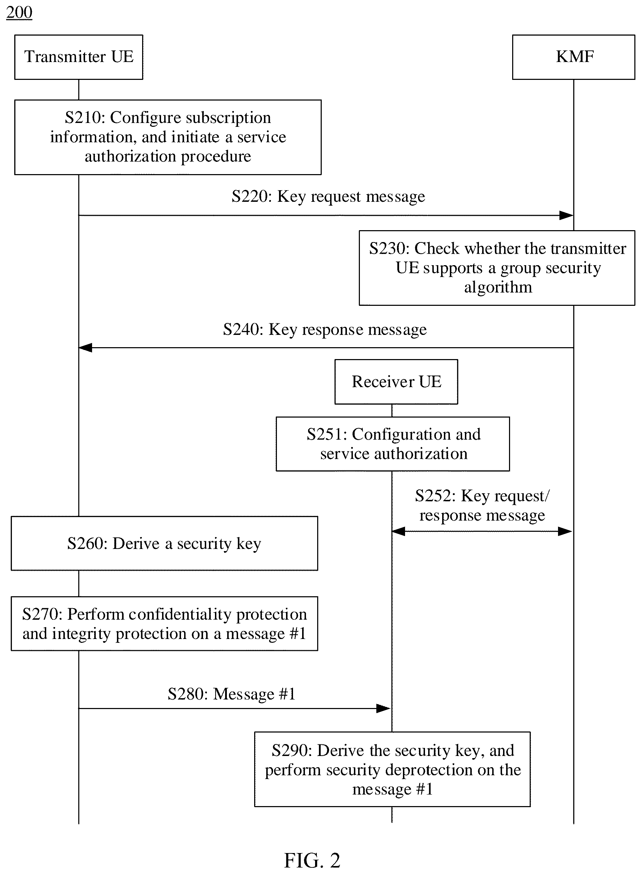

FIG. 2 is a schematic flowchart of a communication method 200 according to an embodiment of this application. The method 200 may be applied to the network architecture shown in FIG. 1, and is mainly for security of one-to-many communication (a broadcast or multicast scenario). Transmitter UE and receiver UE may be UEs in network coverage, or may be UEs out of network coverage. A KMF may be a key management network element. As shown in FIG. 2, the method includes the following plurality of steps. For a part that is not described in detail, refer to an existing protocol.

S210: The transmitter UE configures subscription information, and the transmitter UE initiates a service authorization procedure.

Optionally, the subscription information includes an address of the key management network element. The transmitter UE configures the address of the key management network element, and the address is used by the transmitter UE to establish a user plane transmission channel to the key management network element.

Optionally, the subscription information includes a security parameter. The transmitter UE configures the security parameter used to access the key management network element, for example, a certificate or a (pre-)shared key. The security parameter is used to protect transmission security between the transmitter UE and the key management network element.

For the service authorization procedure initiated by the transmitter UE, in an implementation, the transmitter UE establishes a connection to the network management function network element, and the transmitter UE requests, from the network management function network element, a parameter #1 required for one-to-many communication. Correspondingly, after receiving the request from the transmitter UE, the network management function network element determines whether to authorize the request of the transmitter UE, and further determines whether to provide the parameter #1 for the transmitter UE.

The parameter #1 includes one or more of the following: a group identifier, a security policy, and the address of the KMF.
(1) The group identifier is used to identify information about a group to which the transmitter UE belongs.
(2) The security policy mainly includes a confidentiality security policy and an integrity security policy. A value of the security policy includes "required" or "not required", and indicates whether security protection is required at a transport layer. For example, the security policy indicates whether confidentiality security protection and/or integrity security protection are/is required at the transport layer.

Optionally, the security policy may be preconfigured in step S210, or may be received from a network side. For example, the security policy is received from the KMF (for example, carried in a key response message in step S240), or the security policy is received from the network management function network element. Optionally, the security policy corresponds to the group identifier, that is, the security policy applicable to the group may be uniquely determined based on the group identifier.

The security policy may be explicitly indicated, that is, indicated by using an independent information element (information element, IE). For example, the security policy is indicated based on 1-bit indication information, where "1" indicates that the security policy is "required", and "0" indicates that the security policy is "not required"; or "true" indicates that the security policy is "required", and "false" indicates that the security policy is "not required". Alternatively, the security policy may be implicitly indicated, that is, indicated based on a security algorithm. For example, when the security algorithm is a null algorithm, it indicates that the security policy is "not required"; or when the security algorithm is a non-null algorithm, it indicates that the security policy is "required". This is not limited in this application.

(3) The address of the KMF indicates address information of the KMF from which the transmitter UE obtains a group key.

For example, in a multicast scenario, the network management function network element may determine, based on group member information, whether to authorize the request of the transmitter UE. For example, when the transmitter UE is a group member, the network management function network element determines to authorize the request of the transmitter UE, and sends the parameter #1 to the transmitter UE; or when the transmitter UE is not a group member, the network management function network element determines not to authorize the request of the transmitter UE, and refuses to send the parameter #1 to the transmitter UE.

For example, in a broadcast scenario, the network management function network element does not authorize the request of the transmitter UE. When the transmitter UE requests the parameter #1 required for the one-to-many communication, the network management function network element sends the parameter #1 to the transmitter UE.

S220: The transmitter UE sends a key request message to the KMF. Correspondingly, the KMF receives the key request message from the transmitter UE.

The key request message is used to request the group key, and the key request message includes a security capability of the transmitter UE and a group identifier (for example, a group ID).

For example, the group identifier indicates the group key that the transmitter UE expects to obtain. The security capability of the transmitter UE includes a confidentiality algorithm and an integrity algorithm that are supported by the transmitter UE. For example, the confidentiality algorithm supported by the transmitter UE may include but is not limited to: the null encryption algorithm, the AES-128 algorithm, the SNOW-3G-128 algorithm, the ZUC-128 algorithm, and the like, and algorithm identifiers that correspond to these algorithms are NEA0, NEA1, NEA2, and NEA3 respectively. For another example, the integrity security protection algorithm may include but is not limited to: the null integrity protection algorithm, the AES-128 algorithm, the SNOW-3G-128 algorithm, the ZUC-128 algorithm, and the like, and algorithm identifiers that correspond to these algorithms are NIA0, NIA1, NIA2, and NIA3 respectively.

For example, the key request message may be a key request message.

S230: The KMF checks whether the transmitter UE supports a group security algorithm.

In other words, the KMF checks whether the security capability of the transmitter UE includes the group security algorithm.

For example, if the security algorithm supported by the security capability of the transmitter UE is the null encryption algorithm and the AES-128 algorithm, and the group security algorithm includes the null integrity protection algorithm, the KMF may determine that the transmitter UE does not support the group security algorithm. Alternatively, if the security algorithm supported by the security capability of the transmitter UE is the null encryption algorithm, the null integrity protection algorithm, and the AES-128 algorithm, and the group security algorithm includes the AES-128 algorithm, the KMF may determine that the transmitter UE supports the group security algorithm. Alternatively, if the security algorithm supported by the security capability of the transmitter UE is the AES-128 algorithm and the SNOW-3G-128 algorithm, the group security algorithm includes the SNOW-3G-128 algorithm and the ZUC-128 algorithm, the KMF may determine that the transmitter UE supports the group security algorithm.

Optionally, the group security algorithm may be determined by the KMF based on a local configuration.

S240: The KMF sends the key response message to the transmitter UE. Correspondingly, the transmitter UE receives the key response message from the KMF.

For example, in step S230, if the KMF determines that the transmitter UE supports the group security algorithm, the KMF may accept the key request of the transmitter UE in step S220, that is, may provide the group key for the transmitter UE. The key response message includes one or more of the following parameters such as a group member identifier of the transmitter UE (for example, a group member ID of the transmitter UE), a group security algorithm identifier (for example, a confidentiality algorithm ID and/or an integrity algorithm ID), a PGK, and a PGK ID.
(1) The group member ID is used to mark an identifier of the transmitter UE in the group.
(2) The group security algorithm identifier indicates a security algorithm used when the transmitter UE performs one-to-many communication in the group, and the group security algorithm identifier includes the confidentiality algorithm identifier and the integrity algorithm identifier.
(3) For specific descriptions of the PGK and the PGK ID, refer to the foregoing related descriptions. Details are not described herein again. Optionally, the PGK and the PGK ID may be carried in the key response message in step S240, or may be carried in another independent message.

Optionally, in step S230, if the KMF determines that the transmitter UE does not support the group security algorithm, the KMF may reject the key request of the transmitter UE in step S220, that is, refuse to provide the parameters such as the group member ID, the group security algorithm identifier, the PGK, and the PGK ID for the transmitter UE. For example, the KMF may send a key response message to the transmitter UE, where the key response message indicates that the group key is refused to be provided, or the key response message indicates that the key request fails. Optionally, the key response message includes a rejection reason. For example, the rejection reason may be that the transmitter UE does not support the group security algorithm.

For example, the key response message may be a key response message.

S251: The receiver UE configures subscription information. The receiver UE initiates a service authorization procedure.

S252: The receiver UE sends a key request message to the KMF. Correspondingly, the KMF receives the key request message from the receiver UE. Further, the KMF sends a key response message to the receiver UE. Correspondingly, the receiver UE receives the key response message from the KMF.

Based on steps S251 and S252, the receiver UE may establish a connection to the network management function network element, and obtain the group identifier, the security policy (for example, security protection needs or does not need to be performed), the address of the KMF, and the like from the network management function network element. In addition, when the receiver UE supports the group security algorithm, the receiver UE may also obtain one of more of parameters such as a group member identifier of the receiver UE, a group security algorithm identifier (for example, a confidentiality algorithm ID and/or an integrity algorithm ID), a PGK, or a PGK ID from the KMF.

For specific implementations of steps S251 and S252, refer to the related descriptions in steps S210 to S240. For brevity, details are not described herein again.

S260: The transmitter UE derives a security key.

For example, the transmitter UE derives one or more of the following security keys: a PTK, a PIK, or a PEK, to protect a message subsequently sent when the transmitter UE performs one-to-many communication in the group. For specific derivation methods of the PTK, the PIK, and the PEK, refer to the foregoing related descriptions. For brevity, details are not described herein again.

S270: The transmitter UE performs security protection, for example, confidentiality security protection and integrity security protection, on a message #1.

The message #1 includes one or more of the following: the group identifier (for example, the group ID), the group member identifier of the transmitter UE (for example, a transmitter UE ID), the PGK ID, a PTK ID, a counter, a payload, and a MAC. Optionally, ciphertext enc may be sent to the receiver UE together as a part of the payload. Optionally, the PGK ID may be of 8 bits, the PTK ID may be of 16 bits, and the MAC may be of 32 bits.

For example, when the security policy configured on the network side indicates that the message #1 does not need to be encrypted, that is, confidentiality security protection does not need to be performed on the message #1, the transmitter UE may set the PGK ID, the PTK ID, and the counter to be 0; or when the security policy indicates that integrity security protection does not need to be performed on the message #1, the transmitter UE may set the MAC to be 0.

In an implementation, input parameters for performing security protection on the message #1 may include the PEK/PIK, the PTK ID, and the counter. Specifically, the algorithm (see TS 33.401) is used with the following modifications:
- direction is always set to be 0;
- bearer[0] to bearer[4] are set to an LCID;
- count[0] to count[15] are set to the PTK ID; and
- The counter is input to count[16] to count[31].

A logical channel ID (LCID) associated with a PDCP/RLC entity is used as an input for encryption to avoid duplicate key streams.

The confidentiality security protection means to perform encryption on the message based on a selected encryption algorithm and an encryption key. For example, the encryption key is a PEK. The integrity security protection (integrity protection) means to perform integrity protection on the message based on a selected integrity algorithm and an integrity protection key. For example, the integrity protection key is a PIK. Specifically, a physical means or a cryptographic method is used to ensure that information is not tampered with or is not modified without authorization during and after generation, transmission, and storage of the information. Integrity security protection may be performed on the information by using the cryptographic method in a plurality of manners. For example, a one-way function (for example, a hash function Hash) is used, and a symmetric key (integrity protection key) and the message #1 are used as the input parameters to generate the MAC, to implement integrity security protection on the message #1.

Optionally, after the transmitter UE performs security protection on the message #1, the ciphertext of the confidentiality security protection may be denoted as enc, a calculation result of the integrity security protection may be denoted as MAC, and the counter may be used as a freshness (freshness) parameter. It should be understood that the freshness parameter is a parameter newly added to the input parameter to prevent a replay attack (replay attack). The freshness parameter is added to the input parameter, to ensure that an output parameter is fresh (fresh). For example, a common freshness parameter includes a nonce (Nonce), a timestamp (timestamp), a counter value (counter or index), and the like.

S280: The transmitter UE sends the message #1. Correspondingly, the receiver UE receives the message #1 from the transmitter UE.

For example, the transmitter UE sends the message #1 through broadcast or multicast.

S290: The receiver UE derives the security key, and performs security deprotection on the message #1.

Based on steps S252 and S270, the receiver UE obtains a part or all of the following parameters from the KMF: the group member identifier of the receiver UE (for example, the group member ID of the receiver UE), the group security algorithm identifier (for example, the confidentiality algorithm ID and/or the integrity algorithm ID), the PGK, and the PGK ID. The message #1 obtained by the receiver UE from the transmitter UE includes a part or all of the following parameters: the group identifier (for example, the group ID), the group member identifier of the transmitter UE (for example, the transmitter UE ID), the PGK ID, the PTK ID, the counter, the payload, and the MAC.

For example, the receiver UE may derive the PGK based on the group ID and the PGK ID that are carried in the message #1, derive the PTK based on the PGK, the transmitter UE ID, and the PTK ID, derive the PEK based on the PTK and the constant and the confidentiality algorithm ID that are used to calculate the PEK, and derive the PIK based on the PTK and the constant and the integrity security protection algorithm ID that are used to calculate the PIK. For specific derivation processes of the PGK, the PTK, and the PIK, refer to the related descriptions in step S260. For brevity, details are not described herein again.

Optionally, when not all of the PGK ID, the PTK ID, and the counter are 0, it indicates that the transmitter UE encrypts the message #1, and the receiver UE may decrypt, based on the PEK, the ciphertext of the payload carried in the message #1, to obtain plaintext. In addition, when the MAC is not all 0, it indicates that the transmitter UE performs integrity security protection on the message #1, and the receiver UE may perform integrity security protection check on the message #1 based on the PIK.

In an example, decrypting the ciphertext in the message #1 based on the PEK includes performing decryption calculation or a decryption operation based on the selected encryption algorithm.

In an example, performing integrity security protection check on the message #1 based on the PIK includes calculating a value of a MAC based on the selected integrity algorithm, and comparing the value of the MAC with the value of the MAC carried in the message #1. If the values of the MAC are the same, it may be considered that the integrity check succeeds; or if the values of the MAC are different, the integrity check fails. Specifically, the receiver UE may calculate the shared key (integrity protection key), and perform integrity security protection check on the message #1. The shared key (integrity protection key) may be used by the receiver UE to check whether the MAC carried in the received message #1 is generated by the transmitter UE, that is, check authenticity of the message #1 on which the transmitter UE performs integrity security protection. If the MAC is generated by using the shared key (integrity protection key) of the transmitter UE, and the receiver UE successfully checks the digital signature or the MAC by using the shared key (integrity protection key), it indicates that the message #1 is not tampered with; or if the MAC is not generated by using the shared key (integrity protection key) of the transmitter UE, and the receiver UE fails to check the digital signature or the MAC by using the shared key (integrity protection key), the check fails.

For the solution provided above, for the message #1 sent by the transmitter UE, if an attacker changes all values that are of the MAC in the message #1 and that are not 0 to 0, the receiver UE does not perform integrity security protection check. Consequently, the attacker may tamper with the message #1 to spoof the receiver UE, and communication security cannot be ensured. In addition, when the security policy indicates that the confidentiality security protection is not required, but the integrity security protection is required, the PGK ID, the PTK ID, and the counter in the message #1 are all set to be 0. In this case, the receiver UE cannot derive the PIK based on the parameter in the received message #1, resulting in a failure in the integrity security protection check.

In view of this, this application provides a communication method and a communication apparatus. A format of a first message is redefined, including a payload field and field other than the payload field, whether to perform security protection on the payload field is determined according to a security policy corresponding to a proximity-based services group, and a value is assigned to the field other than the payload field. In addition, an identifier of a proximity-based services group key, an identifier of a proximity-based services group traffic key, a freshness parameter, and confidentiality indication information are decoupled. This can avoid a case in which integrity check fails in a scenario in which the security policy is that confidentiality is not required but integrity is required, improve network communication security, and reduce a potential security risk.

For ease of understanding embodiments of this application, the following descriptions are provided.

First, in this application, unless otherwise stated or there is a logic conflict, terms and/or descriptions between different embodiments are consistent and may be mutually referenced, and technical features in different embodiments may be combined into a new embodiment based on an internal logic relationship thereof.

Second, in this application, "at least one" indicates one or more, "a plurality of" indicates two or more. A term "and/or" describes an association relationship between associated objects, and indicates that three relationships may exist. For example, A and/or B may indicate the following three cases: A exists alone, both A and B exist, and B exists alone, where A and B may be singular or plural. In the descriptions of this application, a character "/" usually indicates an "or" relationship between the associated objects. "At least one of the following items (pieces)" or a similar expression thereof refers to any combination of these items, including a single item (piece) or any combination of a plurality of items (pieces). For example, at least one of a, b, and c may indicate a, b, c, a and b, a and c, b and c, or a, b, and c, where Each of a, b, and c may be in a singular form or a plural form.

Third, in this application, "first", "second", and various numbers (for example, #1 and #2) are merely used for distinguishing for ease of description, and are not intended to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described. It should be noted that a number of each step in embodiments of this application is merely a number, and does not represent an execution sequence. A specific execution sequence is described by using words.

Fourth, in this application, descriptions such as "when...", "in a case of...", and "if" all mean that a device performs corresponding processing in an objective case, are not intended to limit time, do not require the device to perform a determining action during implementation, and do not mean that there is another limitation.

Fifth, in this application, terms "include" and "have" and any other variants thereof are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

Sixth, in this application, "indicate" may include a direct indication and an indirect indication. When a piece of indication information indicates A, the indication information may directly indicate A or indirectly indicate A, but it does not indicate that the indication information definitely carries A. In this application, "indication information" may be an explicit indication, namely, a direct indication using signaling or an indication obtained based on a parameter indicated by signaling in combination with another rule or another parameter or obtained through deduction; or may be an implicit indication, to be specific, an indication obtained according to a rule or based on a relationship or another parameter or obtained through deduction. This is not specifically limited in this application.

Seventh, in this application, a "protocol" may mean a standard protocol in the communication field, for example, may include a 5G protocol, an NR protocol, and a related protocol applied to a future communication system. This is not limited in this application. "Preconfiguration" may include predefinition, for example, protocol definition. "Predefinition" may be implemented by pre-storing corresponding code or a corresponding table in a device, or may be implemented in another manner of indicating related information. A specific implementation of "predefinition" is not limited in this application.

Eighth, in this application, "storage" may mean storage in one or more memories. The one or more memories may be separately disposed, or may be integrated in an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Ninth, in this application, "communication" may also be described as "data transmission", "information transmission", "data processing", or the like. This is not limited in this application.

The following describes in detail the communication method provided in embodiments of this application with reference to the accompanying drawings. Embodiments provided in this application are applicable to any communication scenario in which a transmit-end device communicates with a receive-end device, for example, may be applied to the communication systems shown in FIG. 1 and FIG. 2.

In embodiments of this application, the message authentication code MAC is set to be 0, indicating that integrity protection is not enabled; or the MAC may be set to false, indicating that integrity protection is not enabled. On the contrary, the MAC is set not to be 0, indicating that integrity protection is enabled. For example, if the value of the MAC in the first message is 0, it indicates that integrity security protection is not performed on the payload field in the first message; or if the value of the MAC in the first message is not 0, it indicates that security protection is performed on the payload field in the first message.

Similarly, at least one of the identifier of the proximity-based services group key and the identifier of the proximity-based services group traffic key is set to be 0, indicating that confidentiality protection is not enabled. Alternatively, at least one of the identifier of the proximity-based services group key and the identifier of the proximity-based services group traffic key may be set to false, indicating that confidentiality protection is not enabled. For example, if a value of the at least one of the identifier of the proximity-based services group key and the identifier of the proximity-based services group traffic key in the first message is 0, it indicates that the payload field in the first message is not encrypted.

It should be noted that, that the field (namely, the identifier of the proximity-based services group key, the identifier of the proximity-based services group traffic key, or the MAC) other than the payload field in the first message is set to be 0 or not to be 0 is merely an example. Optionally, the value may alternatively be assigned to the field other than the payload field in a Boolean or a character string form. This is not limited in this application. For ease of understanding, in embodiments of this application, the value of 0 or not 0 is assigned to the field other than the payload field (namely, the identifier of the proximity-based services group key, the identifier of the proximity-based services group traffic key, or the MAC), indicating whether the confidentiality security protection and/or the integrity security protection are/is enabled for the corresponding payload field.

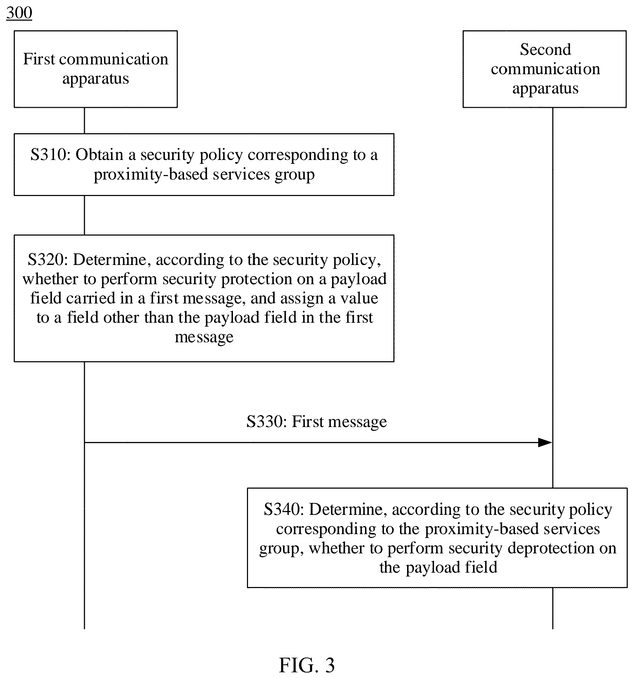

FIG. 3 is a schematic flowchart of a communication method 300 according to an embodiment of this application. The method 300 may be performed by a communication apparatus (for example, a first communication apparatus and a second communication apparatus), or may be performed by a chip or a circuit of the communication apparatus, or may be implemented by a logical module or software that can implement all or a part of functions of the communication apparatus. This is not limited in this application. An example in which the method is performed by the first communication apparatus (for example, transmitter UE) and the second communication apparatus (for example, receiver UE) is used below for description. As shown in FIG. 3, the method includes the following plurality of steps. For a part that is not described in detail, refer to the method 200 or an existing protocol.

S310: The first communication apparatus obtains a security policy corresponding to a proximity-based services group.

The security policy includes a confidentiality security policy and/or an integrity security policy, the confidentiality security policy indicates whether confidentiality security protection is enabled for a message of the proximity-based services group, and the integrity security policy indicates whether integrity security protection is enabled for the message of the proximity-based services group. For example, a value of the security policy may include 1 or 0, or a value of the security policy may include true or false, where the value 1 or true indicates the first communication apparatus to perform security protection on a to-be-sent first message, and the value of 0 or false indicates the first communication apparatus not to perform security protection on a to-be-sent first message. For ease of description, an example in which the value of the security policy is 1 or 0 below for description. The proximity-based services group includes at least two members, and the first communication apparatus is one of the at least two members.

Optionally, the security policy may be preconfigured in step S310, or may be received from a network side. For example, the security policy is received from a KMF, or the security policy is received from a network management function network element. Optionally, the security policy corresponds to a group identifier, that is, the security policy applicable to the group may be uniquely determined based on the group identifier.

Optionally, the first communication apparatus and the second communication apparatus in this embodiment of this application may be terminal devices, for example, a mobile phone, a vehicle, an uncrewed aerial vehicle, or a wearable device, or may be chips in the terminal device. In addition, the terminal device may also be referred to as user equipment. Therefore, the communication apparatus may also be user equipment or a chip in the user equipment. This is not specifically limited in this application.

It should be understood that the member herein is a terminal device. The technical solutions of this application are mainly applicable to a one-to-many secure communication scenario between terminal devices. The security policy corresponding to the proximity-based services group may be understood as that all members belonging to a same group use a same security policy in an information transmission process. For example, a network device configures, for all the members in the group, a same security policy, for example, the confidentiality security protection is enabled and the integrity security protection is not enabled. For example, a group includes five UEs: UE 1 to UE 5. When any UEs in the five UEs receive messages from and send messages to each other, confidentiality security protection is performed on the messages, and integrity protection is not performed. In addition, the confidentiality security policy indicates whether the confidentiality security protection is enabled for the message of the proximity-based services group, and the integrity security policy indicates whether the integrity security protection is enabled for the message of the proximity-based services group. It may be understood that when any UEs in the five UEs receive messages from and send messages to each other, for example, when the UE 1 (namely, the first communication apparatus) sends a message to the UE 2 (namely, the second communication apparatus), the UE 1 determines, according to the confidentiality security policy, whether to perform confidentiality security protection on the message. Correspondingly, after receiving the message, the UE 2 determines, according to the confidentiality security policy, whether to decrypt the message and the like. Similarly, the UE 1 determines, according to the integrity security policy, whether to perform integrity security protection on the message. Correspondingly, after receiving the message, the UE 2 determines, according to the integrity security policy, whether to perform integrity check on the message and the like.

For example, a manner in which the first communication apparatus obtains the security policy may be as follows: The first communication apparatus sends a request message to the key management function network element, where the request message includes a group identifier of the proximity-based services group and a security capability of the first communication apparatus, and the request message is used to request to obtain the security policy associated with the group identifier. Correspondingly, the key management function network element receives the request message from the first communication apparatus, and sends the security policy to the first communication apparatus. Correspondingly, the first communication apparatus receives the security policy from the key management function network element.

Optionally, the security policy is preconfigured on the first communication apparatus.

S320: The first communication apparatus determines, according to the security policy, whether to perform security protection on a payload (payload) field carried in the to-be-sent first message, and assigns a value to a field other than the payload field in the first message.

The field other than the payload field includes a first security parameter and/or a second security parameter. The first security parameter may also indicate whether the confidentiality security protection is performed, and the second security parameter may also indicate whether the integrity security protection is performed. The first security parameter includes one or more of the following: an identifier of a proximity-based services group key (for example, a PGK ID), an identifier of a proximity-based services group traffic key (for example, a PTK ID), a freshness parameter (for example, a counter counter value), or confidentiality indication information. The second security parameter includes integrity indication information or a MAC. The confidentiality indication information indicates whether the confidentiality security protection is enabled, the integrity indication information indicates whether the integrity security protection is enabled, and the security protection includes the confidentiality security protection and/or the integrity security protection. It should be understood that specific content included in the first security parameter and/or the second security parameter is merely an example. Another parameter used to perform confidentiality security protection on the first message also belongs to the first security parameter, and another parameter used to perform integrity security protection on the first message also belongs to the second security parameter. This is not limited in this application. For ease of understanding and description, an example in which the first security parameter is at least one of the PGK ID, the PTK ID, and the counter or the confidentiality indication information, and the second security parameter is at least one of the MAC and the integrity indication information is used below for description.

For example, the first message includes the group identifier (group ID), a group member identifier (group member ID), the PGK ID, the PTK ID, the counter, the payload, and the MAC, and a format of the first message is shown as follows:

| | | | | | | |
|---|---|---|---|---|---|---|
| Group identifier | Group member identifier | PGK ID | PTK ID | Counter | Payload | MAC |

Optionally, the confidentiality indication information and/or the integrity indication information are/is carried in an information header of a PDCP data packet of the first communication apparatus. For example, the confidentiality indication information or the integrity indication information may be of 1 bit. For example, when the confidentiality security protection is enabled, a value of the confidentiality indication information may be 1; or when the confidentiality security protection is not enabled, a value of the confidentiality indication information may be 0. When the integrity security protection is enabled, a value of the integrity indication information may be 1; or when the integrity security protection is not enabled, a value of the integrity indication information may be 0. The confidentiality indication information may be carried in the first message together with one or more of the identifier of the proximity-based services group key, the identifier of the proximity-based services group traffic key, and the freshness parameter. The integrity indication information may be carried in the first message together with the MAC. This is not limited in this application.

The following specifically describes an implementation in which when the security policy indicates that security protection needs to be performed on the first message (for example, the value of the security policy is 1) or does not need to be performed on the first message (for example, the value of the security policy is 0), the first communication apparatus determines whether to perform security protection on the payload field carried in the first message, and assigns the value to the field other than the payload field in the first message.

In this embodiment of this application, when the first communication apparatus determines, according to the confidentiality security policy, to perform confidentiality protection on the payload field in the first message, the payload field carries ciphertext of the to-be-sent message content; or when the first communication apparatus determines, according to the confidentiality security policy, not to perform confidentiality protection on the payload field in the first message, the payload field carries plaintext of the to-be-sent message content.

For example, when the confidentiality security policy indicates that the confidentiality security protection is enabled, the first communication apparatus determines to perform confidentiality security protection on the payload field carried in the to-be-sent first message, and sets a value of at least one of the identifier of the proximity-based services group key, the identifier of the proximity-based services group traffic key, the freshness parameter, and the confidentiality indication information that are carried in the first message not to be 0.

For example, when the confidentiality security policy indicates that the confidentiality security protection is not enabled, the first communication apparatus determines not to perform confidentiality security protection on the payload field carried in the to-be-sent first message, and sets a value of at least one of the identifier of the proximity-based services group key, the identifier of the proximity-based services group traffic key, the freshness parameter, and the confidentiality indication information that are carried in the first message to be 0.

For example, if the network configures that the confidentiality protection needs to be performed, the first communication apparatus sets the PGK ID, the PTK ID, and the counter in the first message not to be 0 based on a selected encryption algorithm, and encrypts the payload in the first message. If the network configures that the confidentiality protection is not performed, the first communication apparatus sets the PGK ID, the PTK ID, and the counter in the first message to be 0 or not to be 0.

For example, when the integrity security policy indicates that the integrity security protection is enabled, the first communication apparatus determines to perform integrity security protection on the payload field carried in the to-be-sent first message, and sets a value of the MAC carried in the first message not to be 0, that is, does not set all values of the MAC to be 0, or assigns a value to the MAC based on the calculation method or the usage rule in FIG. 2.

For example, when the integrity security policy indicates that the integrity security protection is not enabled, the first communication apparatus determines not to perform integrity security protection on the payload field carried in the to-be-sent first message, and sets all values of the MAC carried in the first message to be 0.

For example, if the network configures that the integrity protection needs to be performed, the first communication apparatus calculates, based on a selected integrity algorithm, the MAC carried in the first message. If the network configures that the integrity protection is not performed, the first communication apparatus sets all the values of the MAC in the first message to be 0, or does not carry the MAC in the to-be-sent first message.

For example, when the confidentiality security policy indicates that the confidentiality security protection is not enabled, but the integrity security policy indicates that the integrity security protection is enabled, the first communication apparatus sets the MAC not to be 0, and sets at least one of the identifier of the proximity-based services group key, the identifier of the proximity-based services group traffic key, and the freshness parameter not to be 0, that is, does not set the at least one of the identifier of the proximity-based services group key, the identifier of the proximity-based services group traffic key, and the freshness parameter to be 0.

For example, when the confidentiality security policy indicates that the confidentiality security protection is not enabled, but the integrity security policy indicates that the integrity security protection is enabled, the first communication apparatus sets the confidentiality indication information to be 0.

For example, if the network configures that the confidentiality protection is not performed and the integrity protection is performed, the first communication apparatus sets a value of security information (for example, the PGK ID, the PTK ID, and the counter) not to be 0 in the first message, or sets the value of the confidentiality indication information to be 0, and sets the MAC in the first message not to be 0.

For example, if the network configures that the confidentiality protection and the integrity protection are not performed, the first communication apparatus sets a value of security information (for example, the PGK ID, the PTK ID, and the counter) to be 0 in the first message, or sets the value of the confidentiality indication information to be 0, and sets all the values of the MAC in the first message to be 0.

S330: The first communication apparatus sends the first message to the second communication apparatus. Correspondingly, the second communication apparatus receives the first message from the first communication apparatus.

S340: The second communication apparatus determines, according to the security policy corresponding to the proximity-based services group, whether to perform security deprotection on the payload field.

The security deprotection includes decryption and/or integrity check. For specific implementations of decryption and integrity check, refer to the related descriptions of the method 200. For brevity, details are not described herein again.

The following specifically describes an implementation in which when the security policy indicates that security protection needs to be performed on the first message (for example, the value of the security policy is 1) or does not need to be performed on the first message (for example, the value of the security policy is 0), the second communication apparatus may determine, according to the security policy corresponding to the proximity-based services group, whether to perform security deprotection on the payload field.

For example, when the confidentiality security policy indicates that the confidentiality security protection is enabled, the second communication apparatus determines to decrypt the payload field.

For example, when the confidentiality security policy indicates that the confidentiality security protection is not enabled, the second communication apparatus determines not to decrypt the payload field.

For example, if the network configures that the confidentiality protection needs to be performed, the second communication apparatus performs a decryption operation based on the selected encryption algorithm. If the network configures that the confidentiality protection is not performed, the second communication apparatus does not decrypt the first message.

For example, when the integrity security policy indicates that the integrity security protection is enabled, the second communication apparatus determines to perform integrity check on the payload field.

For example, when the integrity security policy indicates that the integrity security protection is not enabled, the second communication apparatus determines not to perform integrity check on the payload field.

For example, if the network configures that the integrity protection needs to be performed, the second communication apparatus performs integrity check on the first message based on the selected integrity algorithm. If the network configures that the integrity protection is not performed, the second communication apparatus does not perform integrity check on the first message.

When the security policy indicates that security protection needs to be performed on the first message (for example, the value of the security policy is 1) or does not need to be performed on the first message (for example, the value of the security policy is 0), the second communication apparatus may further determine, according to the security policy corresponding to the proximity-based services group and the value of the field other than the payload field carried in the first message, whether to perform security deprotection on the payload field.

For example, the second communication apparatus compares whether the security policy that corresponds to the proximity-based services group and that is configured by the network device matches the value of the field other than the payload field carried in the received first message. If the two values do not match, the second communication apparatus may discard the first message. On the contrary, if the two values match, the second communication apparatus may further determine, according to the security policy or the value of the field, whether to perform security deprotection.

For example, when the integrity security policy indicates that the integrity security protection is enabled, and the field other than the payload field carried in the first message does not carry the MAC, or all the values of the MAC carried in the field other than the payload field carried in the first message are 0, it indicates that an integrity security protection indication (for example, the MAC) carried in the first message does not match the integrity security policy configured on the network side. In this case, the second communication apparatus may determine that integrity check on the payload field fails, or the second communication apparatus discards the first message.

For example, when the integrity security policy indicates that the integrity security protection is enabled, and the value of the MAC in the field other than the payload field carried in the first message is not 0, the second communication apparatus determines to perform integrity check on the payload field.

For example, when the integrity security policy configured on the network side indicates that the integrity security protection is required (for example, the value is 1), if all the values of the MAC carried in the first message are 0 or the MAC is not carried, it indicates that the integrity security protection indication carried in the first message does not match the integrity security policy configured on the network side. In this case, the second communication apparatus discards the first message. If not all the values of the MAC carried in the first message are 0, it indicates that the integrity security protection indication (for example, the MAC) carried in the first message matches the integrity security policy configured on the network side. In this case, the second communication apparatus performs integrity check on the first message, for example, calculates a value of a MAC based on the selected integrity algorithm, and compares the value of the MAC with the value of the MAC carried in the first message to determine whether the values of the MAC are the same, to check integrity of the received first message. If the values of the MAC are the same, the integrity protection check succeeds. If the values of the MAC are different, the integrity protection check fails.

For example, when the integrity security policy indicates that the integrity security protection is not enabled, and the value of the MAC in the field other than the payload field carried in the first message is not 0, the second communication apparatus determines not to perform integrity check on the payload field.

For example, when the integrity security policy indicates that the integrity security protection is not enabled, and the field other than the payload field carried in the first message does not carry the MAC, or all the values of the MAC carried in the field other than the payload field carried in the first message are 0, the second communication apparatus determines not to perform integrity check on the payload field.

For example, when the integrity security policy configured on the network side indicates that the integrity security protection is not required (for example, the value is 0), if the value of the MAC carried in the first message is 0 or the MAC is not carried, it indicates that the integrity security protection indication (for example, the MAC) carried in the first message matches the integrity security policy configured on the network side. In this case, the second communication apparatus does not perform integrity check on the first message. If the value of the MAC carried in the first message is not 0, it indicates that the integrity security protection indication carried in the first message does not match the integrity security policy configured on the network side. In this case, the second communication apparatus discards the first message, or the second communication apparatus does not perform integrity check on the first message.

Optionally, if the network configures that the integrity protection is not performed, the second communication apparatus may ignore the value of the MAC carried in the first message, and does not perform integrity check on the first message, or consider that the integrity check on the first message succeeds.

For example, when the confidentiality security policy indicates that the confidentiality security protection is not enabled, and the value of the at least one of the identifier of the proximity-based services group key, the identifier of the proximity-based services group traffic key, and the freshness parameter that are carried in the field other than the payload field carried in the first message is not 0, the second communication apparatus determines not to decrypt the payload field.

For example, when the confidentiality security policy indicates that the confidentiality security protection is not enabled, and the confidentiality indication information carried in the field other than the payload field carried in the first message indicates that the confidentiality security protection is enabled, the second communication apparatus determines that the confidentiality indication information carried in the field other than the payload field indicates that the confidentiality security protection is enabled, and not to decrypt the payload field.

For example, when the confidentiality security policy configured on the network side indicates that the confidentiality security protection is not required (for example, the value is 0), if all values of the PGK ID, the PTK ID, and the counter carried in the first message are 0, and/or if the value of the confidentiality indication information carried in the first message is 0, it indicates that a confidentiality security protection indication (for example, the PGK ID, the PTK ID, the counter, or the confidentiality indication information) carried in the first message matches the confidentiality security policy configured on the network side, and the second communication apparatus does not decrypt the first message. If none of the values of the PGK ID, the PTK ID, and the counter carried in the first message is 0, and/or if the value of the confidentiality indication information carried in the first message is 1, it indicates that the confidentiality security protection indication carried in the first message does not match the confidentiality security policy configured on the network side, and the second communication apparatus discards the first message, or the second communication apparatus does not decrypt the first message.

For example, when the confidentiality security policy indicates that the confidentiality security protection is enabled, and the confidentiality indication information indicates that the confidentiality security protection is not enabled (for example, the value of the at least one of the identifier of the proximity-based services group key, the identifier of the proximity-based services group traffic key, and the freshness parameter that are carried in the field other than the payload field is not 0, or the confidentiality indication information carried in the field other than the payload field indicates that the confidentiality security protection is not enabled), the second communication apparatus determines to decrypt the payload field.

For example, when the confidentiality security policy indicates that the confidentiality security protection is enabled, and the confidentiality indication information indicates that the confidentiality security protection is enabled (for example, the value of the at least one of the identifier of the proximity-based services group key, the identifier of the proximity-based services group traffic key, and the freshness parameter that are carried in the field other than the payload field is not 0, or the confidentiality indication information carried in the field other than the payload field indicates that the confidentiality security protection is enabled), the second communication apparatus determines to decrypt the payload field.

For example, when the confidentiality security policy configured on the network side indicates that the confidentiality security protection is required (for example, the value is 1), if none of values of the PGK ID, the PTK ID, and the counter carried in the first message is 0, and/or if the value of the confidentiality indication information carried in the first message is 1, it indicates that the confidentiality security protection indication (for example, the PGK ID, the PTK ID, the counter, or the confidentiality indication information) carried in the first message does not match the confidentiality security policy configured on the network side, and the second communication apparatus discards the first message, or decrypts the first message. If none of the values of the PGK ID, the PTK ID, and the counter carried in the first message is 0, and/or if the value of the confidentiality indication information carried in the first message is 0, it indicates that the confidentiality security protection indication carried in the first message matches the confidentiality security policy configured on the network side, and the second communication apparatus decrypts the first message.

According to the solution provided in this application, the format of the first message is redefined, including the payload field and the field other than the payload field, whether to perform security protection on the payload field is determined according to the security policy corresponding to the proximity-based services group, and the value is assigned to the field other than the payload field. In addition, the identifier of the proximity-based services group key, the identifier of the proximity-based services group traffic key, the freshness parameter, and the confidentiality indication information are decoupled. This can avoid a case in which integrity check fails in a scenario in which the security policy is that confidentiality is not required but integrity is required, improve network communication security, and reduce a potential security risk.

Based on the solution shown in FIG. 2, the security policy currently configured on the network side is at a group granularity, to indicate whether the message #1 needs to be security protected. Consequently, security requirements of different UEs in the group cannot be met, and adaptability and flexibility are weak. For example, when the receiver UE in the group is a roadside unit (roadside unit), the message #1 has no confidentiality security protection requirement. When the UE in the group is a vehicle, the message #1 has a confidentiality security protection requirement. If the security policy indicates that the message #1 needs to be security protected, when broadcasting the message to the vehicle, the roadside unit always needs to perform encryption calculation. Further, when receiving the message #1, the vehicle always needs to perform decryption calculation. This increases calculation complexity, signaling overheads, and a communication delay. Therefore, the following method 400 is provided to meet security requirements of different UEs in a group by increasing a value of a security policy, and adaptability and flexibility are better. Correspondingly, receiver UE may further determine, according to the security policy and a value of field other than the payload field carried in message #1, whether to perform security deprotection on the message #1.

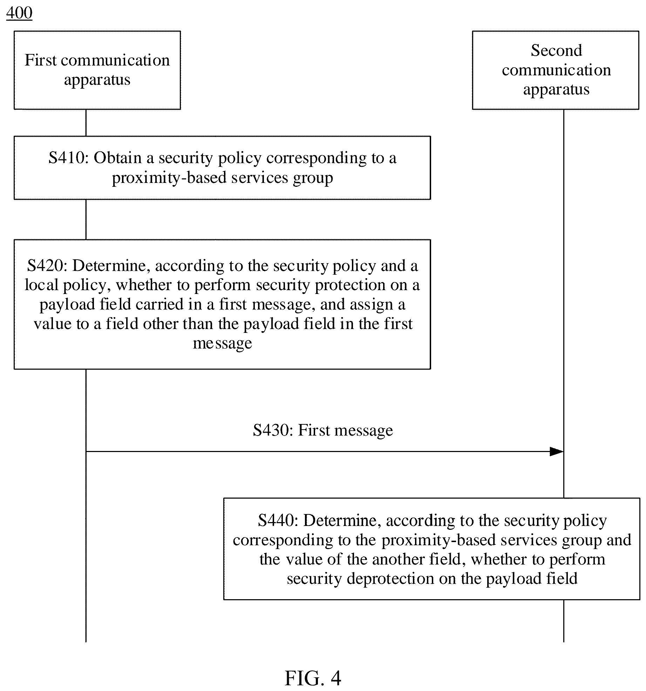

FIG. 4 is a schematic flowchart of a communication method 400 according to an embodiment of this application. The method 400 may be performed by a communication apparatus (for example, a first communication apparatus and a second communication apparatus), or may be performed by a chip or a circuit of the communication apparatus, or may be implemented by a logical module or software that can implement all or a part of functions of the communication apparatus. This is not limited in this application. An example in which the method is performed by the first communication apparatus (for example, transmitter UE) and the second communication apparatus (for example, receiver UE) is used below for description. As shown in FIG. 4, the method includes the following plurality of steps. For a part that is not described in detail, refer to the method 200, the method 300, or an existing protocol.

S410: The first communication apparatus obtains a security policy corresponding to a proximity-based services group.

A value of the security policy includes "preferred", and indicates that security protection is optionally performed on a to-be-sent first message.

S420: The first communication apparatus determines, according to the security policy and a local policy, whether to perform security protection on a payload field carried in the to-be-sent first message, and assigns a value to a field other than the payload field in the first message.

The following specifically describes an implementation in which when the security policy indicates that security protection is optionally performed on the first message (for example, the value of the security policy is "preferred"), the first communication apparatus determines whether to perform security protection on the payload field carried in the first message, and assigns the value to the field other than the payload field in the first message.

For example, when the security policy indicates that the security protection is optionally enabled, the first communication apparatus determines, according to the local policy, to perform security protection on the payload field, and assigns the value to the field other than the payload field in the first message.

The local policy indicates a trigger condition for the first communication apparatus to perform security protection on the payload field. For example, when a terminal type of the first communication apparatus is a roadside unit, confidentiality security protection is not performed, and integrity security protection is optionally performed. When a terminal type of the first communication apparatus is the vehicle, confidentiality security protection is performed, and integrity security protection is optionally performed. For another example, when the first communication apparatus is in a closed environment, confidentiality security protection and/or integrity security protection are/is not performed. For another example, when performance or a terminal capability of the first communication apparatus is insufficient to support enabling of security protection, confidentiality security protection and/or integrity security protection are/is not performed. For another example, for a specific service scenario (session establishment, service registration request, or the like), the first communication apparatus needs to perform confidentiality security protection and/or integrity security protection.

For example, when the confidentiality security policy indicates that the confidentiality security protection is optionally enabled, and a type of the first communication apparatus is a roadside unit, the first communication apparatus determines not to perform confidentiality security protection on the payload field, and sets a value of confidentiality indication information carried in the field other than the payload field to be 0, or sets at least one of an identifier of a proximity-based services group key, an identifier of a proximity-based services group traffic key, and a freshness parameter to be 0.

For example, when the confidentiality security policy indicates that the confidentiality security protection is optionally enabled, and a type of the first communication apparatus is a vehicle, the first communication apparatus determines to perform confidentiality security protection on the payload field, and sets a value of confidentiality indication information carried in the field other than the payload field not to be 0, or sets at least one of an identifier of a proximity-based services group key, an identifier of a proximity-based services group traffic key, and a freshness parameter not to be 0.

For example, if the network configures that the confidentiality protection is optionally performed, and a value of the confidentiality security policy is "preferred", the first communication apparatus determines, based on a terminal type of the first communication apparatus, for example, a roadside unit, not to perform confidentiality security protection on the first message, and sets the values of the PGK ID, the PTK ID, and the counter in the first message to be 0, or sets the value of the confidentiality indication information to be 0. Optionally, a MAC in the first message is set to be 0 or not to be 0.

S430: The first communication apparatus sends the first message to the second communication apparatus. Correspondingly, the second communication apparatus receives the first message from the first communication apparatus.

S440: The second communication apparatus determines, according to the security policy corresponding to the proximity-based services group and the field other than the payload field, whether to perform security deprotection on the payload field.

The security deprotection includes decryption and/or integrity check.

The following specifically describes an implementation in which when the security policy indicates that security protection is optionally performed on the first message (for example, the value of the security policy is "preferred"), the second communication apparatus determines, according to the security policy corresponding to the proximity-based services group and the field other than the payload field, whether to perform security deprotection on the payload field.

For example, the second communication apparatus compares whether the security policy that corresponds to the proximity-based services group and that is configured by a network device matches the field other than the payload field carried in the received first message. Because the value of the security policy is "preferred", regardless of whether the value of the field other than the payload field in the first message is 0 or not 0, the second communication apparatus may consider that the security policy matches the field other than the payload field, and the second communication apparatus may further determine, based on the values of the other fields (for example, the PTK ID, the PGK ID, the counter, the confidentiality indication information, and the MAC), whether to perform security deprotection.

For example, when the integrity security policy indicates that the integrity security protection is optionally enabled, and the value of the MAC carried in the field other than the payload field is not 0, the second communication apparatus determines to perform integrity check on the payload field.

For example, when the integrity security policy indicates that the integrity security protection is optionally enabled, and the field other than the payload field does not carry the MAC or the value of the MAC carried in the field other than the payload field is 0, the second communication apparatus determines not to perform security protection on the payload field.

For example, when the integrity security policy configured on the network side indicates that the integrity security protection is optionally enabled (for example, the value is "preferred"), if the value of the MAC carried in the first message is 0 or the MAC is not carried, the second communication apparatus does not perform integrity check on the first message, or considers that the integrity check on the first message succeeds. If not all values of the MAC carried in the first message are 0, the second communication apparatus performs integrity check on the first message, for example, calculates a value of a MAC based on a selected integrity algorithm, and compares the value of the MAC with the value of the MAC carried in the first message to determine whether the values of the MAC are the same, to check integrity of the received first message. If the values of the MAC are the same, the integrity protection check succeeds. If the values of the MAC are different, the integrity protection check fails.

For example, when the confidentiality security policy indicates that the confidentiality security protection is optionally enabled, and the confidentiality indication information indicates that the confidentiality security protection is not enabled, the second communication apparatus determines not to decrypt the payload field.

For example, when the confidentiality security policy indicates that the confidentiality security protection is optionally enabled, and the confidentiality indication information indicates that the confidentiality security protection is enabled, the second communication apparatus determines to decrypt the payload field.

For example, when the confidentiality security policy configured on the network side indicates that the confidentiality security protection is optionally enabled (for example, the value is "preferred"), if the value of the confidentiality indication information carried in the first message is 0, the second communication apparatus does not decrypt the first message, or considers that the first message is successfully decrypted. If the value of the confidentiality indication information carried in the first message is 1, the second communication apparatus decrypts the first message, for example, performs a decryption operation on the payload field in the first message based on a selected confidentiality algorithm.

It should be noted that the method 300 and the method 400 are separately described from the format of the first message, the value of the parameter included in the field other than the payload field in the first message, and adding of the value of the security policy configured by the network device. This can avoid a case in which the second communication apparatus cannot perform integrity check or the check fails after receiving the first message, and flexibility and adaptability are better. The two methods can be implemented independently or in combination. This is not specifically limited in this application.

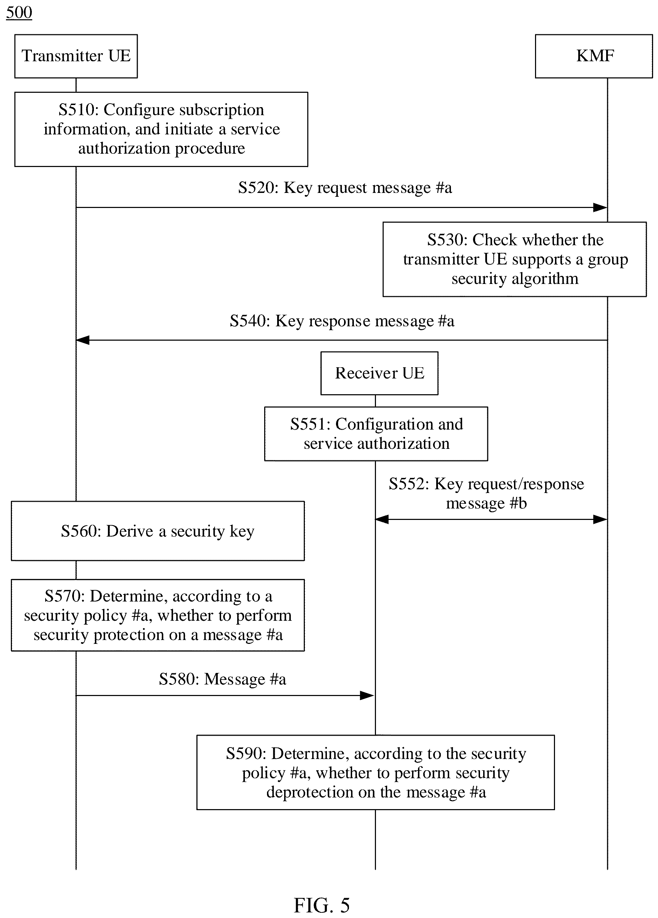

FIG. 5 is a schematic flowchart of a communication method 500 according to an embodiment of this application. The communication method 500 is for security of one-to-many communication (a broadcast or multicast scenario). In this implementation, whether to perform confidentiality security protection and integrity security protection on a message #a is determined by transmitter UE according to both a confidentiality security policy #a configured on a network side and a local policy #a. As shown in FIG. 5, the method includes the following plurality of steps. For a part that is not described in detail, refer to the method 200 to the method 400 or an existing protocol.

S510: Transmitter UE configures subscription information, and the transmitter UE initiates a service authorization procedure.

For example, the transmitter UE obtains a parameter #a required for one-to-many communication, where the parameter #a includes one or more of a group identifier, a security policy #a, and an address of a KMF. The security policy #a mainly includes a confidentiality security policy #a and an integrity security policy #a. A value of the security policy #a may include "required", "not required", or "preferred", and indicates whether security protection is required at a transport layer. For example, when the value of the security policy #a is "preferred", it indicates that the transmitter UE optionally performs security protection on the to-be-sent message #a. In other words, the transmitter UE may perform security protection on the message #a, or may not perform security protection on the message #a. The security protection herein includes confidentiality security protection and integrity security protection.

In this embodiment of this application, the transmitter UE and receiver UE belong to a same group (for example, a proximity-based services group), and have a same group identifier (for example, a group ID of the proximity-based services group). Optionally, the security policy #a is at a group granularity, and is associated with the group ID. In other words, a plurality of UEs in a same group correspond to a same security policy, that is, the plurality of UEs use the same security policy when receiving and sending the message #a.

S520: The transmitter UE sends a key request message #a (namely, a request message) to the KMF. Correspondingly, the KMF receives the key request message #a from the transmitter UE.

The request message includes the group identifier and a security capability of the transmitter UE, and the request message is used to request to obtain the security policy associated with the group identifier.

S530: The KMF checks whether the transmitter UE supports a group security algorithm.

The security policy #a and the group security algorithm may be consistent. For example, when the security policy #a indicates that the security protection is not required, the group security algorithm is a null algorithm; when the security policy #a indicates that the security protection is required, the group security algorithm is a non-null algorithm, for example, a group encryption algorithm and a group integrity protection algorithm; or when the value of the security policy #a is "preferred", the group security algorithm is a null algorithm and a non-null algorithm.

S540: The KMF sends a key response message #a to the transmitter UE. Correspondingly, the transmitter UE receives the key response message #a from the KMF.

The key response message #a includes the security policy associated with the group identifier, for example, the security policy #a.

S551: Receiver UE performs configuration and service authorization.

S552: The receiver UE sends a key request message #b to the KMF. Correspondingly, the KMF receives the key request message #b from the receiver UE. Further, the KMF sends a key response message #b to the receiver UE. Correspondingly, the receiver UE receives the key response message #b from the KMF.

Based on steps S551 and S552, the receiver UE may establish a connection to a network management function network element, and obtain the group identifier, the security policy #a, the address of the KMF, and the like from the network management function network element. Optionally, the security policy #a is associated with the group ID. In addition, when the receiver UE supports the group security algorithm, the receiver UE may also obtain one of more of parameters such as a group member identifier of the receiver UE, a group security algorithm identifier (for example, a confidentiality algorithm ID and/or an integrity algorithm ID), a PGK, or a PGK ID from the KMF.

S560: The transmitter UE derives a security key, for example, one or more of a PTK, a PIK, and a PEK, or another key used for confidentiality protection and/or integrity protection. This is not specifically limited in this application.

For specific implementations of steps S510 to S560 and content or explanations of exchanged messages, refer to the related descriptions in steps S210 to S260 of the method 200. For brevity, details are not described herein again.

S570: The transmitter UE determines, according to the security policy #a, whether to perform security protection on the message #a.

The security policy #a includes the confidentiality security policy #a and/or the integrity security policy #a, and the security protection includes the confidentiality security protection and/or the integrity security protection.

For example, the message #a that is broadcast or multicast includes one or more of the following parameters such as the group identifier (for example, the group ID), a group member identifier of the transmitter UE (for example, a transmitter UE ID), a PGK ID, a PTK ID, a counter (for example, a first security parameter), a payload, and a MAC (for example, a second security parameter). For ease of description, the parameters PGK ID, PTK ID, and counter related to the confidentiality security protection may be collectively referred to as a confidentiality security protection indication, and the parameter MAC related to the integrity security protection may be referred to as an integrity security protection indication. Details are not repeated in the following related part. It should be noted that the parameters included in the confidentiality security indication and the integrity security indication are merely examples provided for ease of understanding of the solution, and should not constitute any limitation on the technical solutions of this application. Another parameter related to the confidentiality security protection and another parameter related to the integrity security protection may also be included in the confidentiality security indication and the integrity security indication, and also fall within the protection scope of this application. This is not limited in this application.

Optionally, for ease of understanding and description, an example in which the first security parameter (or confidentiality security protection indication) is at least one of the PGK ID, the PTK ID, and the counter or confidentiality indication information, and the second security parameter (or integrity security protection indication) is the MAC is used below for description.

Optionally, the PGK ID, the PTK ID, and the counter may be carried in a header (header) of a PDCP data packet of the transmitter UE.

Optionally, the message #a may carry indication information #a (namely, the confidentiality indication information), to indicate whether the confidentiality security protection is enabled. For example, the indication information #a may be of 1 bit. For example, when the confidentiality security protection is enabled, a value of the indication information #a may be 1; or when the confidentiality security protection is not enabled, a value of the indication information #a may be 0. For ease of description or understanding, the indication information #a may be used as a part of the confidentiality security protection indication.

Optionally, the indication information #a may be carried in the header of the PDCP data packet of the transmitter UE together with the PGK ID, the PTK ID, and the counter.

In this implementation, the indication information #a is added to the message #a, so that the receiver UE can determine, based on the indication information #a and the value of the MAC, whether the transmitter UE performs security protection on the message #a. This avoids a case in which when the confidentiality security protection is not enabled, but the integrity security protection is enabled, integrity security protection check performed by the receiver UE on the message #a fails because all the PGK ID, the PTK ID, and the counter in the message #a are set to be 0.

In an implementation, when the security policy #a configured on the network side is "required" or "not required", the transmitter UE may determine, according to the security policy #a, whether to perform security protection on the message #a.

For example, when the security policy #a is "not required", the transmitter UE does not perform confidentiality security protection and integrity security protection on the message #a. Correspondingly, all the PGK ID, the PTK ID, the counter, and the MAC in the message #a are set to be 0. When the security policy #a is "required", the transmitter UE performs confidentiality security protection and integrity security protection on the message #a. Correspondingly, none of the PGK ID, the PTK ID, the counter, and the MAC in the message #a is 0. For a specific implementation in which the transmitter UE performs security protection on the message #a, refer to the related descriptions in step S270 of the method 200. For brevity, details are not described herein again.

Optionally, when the message #a does not carry the indication information #a, whether the values of the parameters PGK ID, PTK ID, and counter that are associated with the confidentiality security protection are 0 is determined by whether the confidentiality security protection and the integrity security protection are enabled. For specific implementation, refer to an example in Table 1. Correspondingly, the receiver UE may determine, according to the security policy #a configured on the network side, whether the transmitter UE performs security protection on the message #a.

Specifically, when the confidentiality security protection is disabled, the values of the associated parameters PGK ID, PTK ID, and counter are set not to be 0, so that the receiver UE can determine, according to the security policy #a configured on the network side, whether the transmitter UE performs security protection on the message #a, and further determine whether decryption or integrity security protection check needs to be performed on the message #a. This avoids a case in which in an existing solution, when the confidentiality security protection is not enabled, but the integrity security protection is enabled, integrity security protection check performed by the receiver UE on the message #a fails because all the PGK ID, the PTK ID, and the counter in the message #a are set to be 0.

Table 1 is an example of specific values of parameters that are carried in the broadcast or multicast message #a and that are obtained when the transmitter UE enables/does not enable confidentiality security protection and integrity security protection. It should be understood that Table 1 is merely an example provided for ease of understanding, and Table 1 may have other changes. Content and an expression manner of the message #a are not limited in this embodiment of this application.

**Table 1**

| Confidentiality security protection | Integrity security protection | PGK ID | PTK ID | Counter | MAC |
|---|---|---|---|---|---|
| Enabled | Enabled | Not 0 | Not 0 | Not 0 | Not 0 |
| Enabled | Disabled | Not 0 | Not 0 | Not 0 | 0 |
| Disabled | Enabled | Not 0 | Not 0 | Not 0 | Not 0 |
| Disabled | Disabled | 0 | 0 | 0 | 0 |

As shown in Table 1, if the transmitter UE determines, according to the security policy #a configured on the network side and the local policy #a, that the integrity security protection is enabled, the value of the MAC is not 0; or if the transmitter UE determines, according to the security policy #a configured on the network side and the local policy #a, that the integrity security protection is not enabled, the value of the MAC is 0. If the transmitter UE determines, according to the security policy #a configured on the network side and the local policy #a, that the confidentiality security protection is enabled, regardless of whether the integrity security protection is enabled, the values of the PGK ID, the PTK ID, and the counter are not 0. If the transmitter UE determines, according to the security policy #a configured on the network side and the local policy #a, that both the confidentiality security protection and the integrity security protection are disabled, the values of the PGK ID, the PTK ID, and the counter are 0. If the transmitter UE determines, according to the security policy #a configured on the network side and the local policy #a, that the confidentiality security protection is disabled, but the integrity security protection is enabled, the transmitter UE sets the values of the PGK ID, the PTK ID, and the counter not to be 0. In other words, in this implementation, whether the values of the parameters PGK ID, PTK ID, and counter that are associated with the confidentiality security protection are 0 is determined by whether the confidentiality security protection and the integrity security protection are enabled.

In another implementation, when the security policy #a configured on the network side is "preferred", the transmitter UE may determine, according to the security policy #a and the local policy #a, whether to perform security protection on the message #a.

The local policy #a may indicate a trigger condition for the transmitter UE to perform security protection on the message #a. For example, when a type of the UE 1 is a roadside unit, confidentiality security protection is not performed; or when a type of the UE 1 is the vehicle, confidentiality security protection is performed. Alternatively, when the UE 1 is in a closed environment, confidentiality security protection and/or integrity security protection are/is not performed; or when the UE 1 is in an open or insecure environment, confidentiality security protection and/or integrity security protection are/is performed. For another example, when performance or a terminal capability of the UE 1 is insufficient to support enabling of security protection, confidentiality security protection and/or integrity security protection are/is not performed. For another example, for a specific service scenario (session establishment, service registration request, or the like), the UE 1 performs confidentiality security protection, integrity security protection, and/or the like. The foregoing is merely an example provided for ease of understanding of the solution, and does not constitute any limitation on the technical solutions of this application.

Optionally, the local policy #a may be preconfigured in step S410, or may be received from the network side. For example, the local policy #a is received from the KMF or the network management function network element.

For example, when the security policy #a configured on the network side is "preferred", it indicates that the transmitter UE optionally performs security protection on the message #a. Therefore, further, the transmitter UE may determine, according to the local policy #a, whether to perform security protection. For example, when the UE type in the group is the roadside unit, the broadcast or multicast message #a has no confidentiality security protection requirement, and confidentiality security protection is not performed; or when the UE type in the group is the vehicle, the broadcast or multicast message #a has a confidentiality security protection requirement, and confidentiality security protection is performed.

In this embodiment of this application, whether the values of the PGK ID, the PTK ID, and the counter in the message #a are 0 is no longer completely bound to whether the confidentiality security protection is enabled. In other words, when the confidentiality security protection is not enabled (or disabled), the indication information #a (namely, the confidentiality indication information) may be used for indication or determining. Correspondingly, the values of the PGK ID, the PTK ID, and the counter may be 0 or may be not 0. This is not specifically limited in this application. When the confidentiality security protection is enabled, the indication information #a may also be used for indication or determining. Correspondingly, the values of the PGK ID, the PTK ID, and the counter are not 0. Similarly, when the integrity security protection is not enabled (or disabled), the indication information #b (namely, the integrity indication information) may be used for indication or determining. For example, a value of the indication information #b is 0, and correspondingly, the value of the MAC is also 0. When the integrity security protection is enabled, the indication information #b may be used for indication or determining. For example, a value of the indication information #b is 1, and correspondingly, the value of the MAC is not 0.

Table 2 is an example of specific values of parameters that are carried in the broadcast or multicast message #a and that are obtained when the transmitter UE enables/does not enable confidentiality security protection and integrity security protection. Each parameter of the message #a shown in Table 2 may be a specific parameter value, or may be a coded value agreed on in advance by the transmitter UE and the receiver UE. It should be understood that Table 2 is merely an example provided for ease of understanding, and Table 2 may have other changes. The content and the expression manner of the message #a are not limited in this embodiment of this application.

**Table 2**

| Confidentiality security protection | Integrity security protection | PGK ID | PTK ID | Counter | Indication information #a | Indication information #b | MAC |
|---|---|---|---|---|---|---|---|
| Enabled | Enabled | Not 0 | Not 0 | Not 0 | 1 | 1 | Not 0 |
| Enabled | Disabled | Not 0 | Not 0 | Not 0 | 1 | 0 | 0 |
| Disabled | Enabled | Not 0 | Not 0 | Not 0 | 0 | 1 | Not 0 |
| Disabled | Disabled | 0 or not 0 | 0 or not 0 | 0 or not 0 | 0 | 0 | 0 |

As shown in Table 1, if the transmitter UE determines, according to the security policy #a configured on the network side and the local policy #a, that the integrity security protection is enabled, the value of the MAC is not 0; or if the transmitter UE determines, according to the security policy #a configured on the network side and the local policy #a, that the integrity security protection is not enabled, the value of the MAC is 0. If the transmitter UE determines, according to the security policy #a configured on the network side and the local policy #a, that the confidentiality security protection is enabled, the value of the indication information #a is 1, and the corresponding values of the PGK ID, the PTK ID, and the counter are not 0; or if the transmitter UE determines, according to the security policy #a configured on the network side and the local policy #a, that the confidentiality security protection is not enabled, the value of the indication information #a is 0, and the values of the PGK ID, the PTK ID, and the counter may be 0, or may be not 0. This is not limited in this application. In other words, in this implementation, whether the confidentiality security protection is enabled may be determined based on the value of the indication information #a, and the values of the parameters PGK ID, PTK ID, and counter that are associated with the confidentiality security protection are not a unique basis for determining whether the confidentiality security protection is enabled.

S580: The transmitter UE sends the message #a. Correspondingly, the receiver UE receives the message #a from the transmitter UE.

For example, the transmitter UE sends the message #a through broadcast or multicast.

S590: The receiver UE derives the security key, and determines, according to the security policy #a, whether to perform security deprotection on the message #a.

For a specific implementation in which the receiver UE derives the security key (for example, one or more of the PTK, the PIK, and the PEK), refer to the related descriptions in step S290 of the method 200. For brevity, details are not described herein again.

For example, the security policy #a includes the confidentiality security policy #a and the integrity security policy #a. For example, the receiver UE locally searches for the corresponding security policy #a based on the group ID carried in the received message #a and the key response message #b received in steps S551 and S552. Optionally, when the receiver UE does not find the security policy #a corresponding to the group ID, optionally, the receiver UE may send a request message to the network side (for example, a PKM), to obtain the security policy #a corresponding to the group ID; or the receiver UE may alternatively choose to discard the received message #a. This is not specifically limited in this application.

In an implementation, when the value of the security policy #a configured on the network side is "required", the receiver UE determines to perform security deprotection on the message #a; or when the value of the security policy #a configured on the network side is "not required", the receiver UE determines not to perform security deprotection on the message #a. In other words, in this implementation, the indication information #a carried in the message #a (for example, for the indication information #a, refer to Table 1) is ignored.

For example, when the confidentiality security policy #a configured on the network side is "required", the receiver UE decrypts ciphertext of the payload in the message #a; or when the confidentiality security policy #a configured on the network side is "not required", the receiver UE does not decrypt the payload in the message #a. When the integrity security policy #a configured on the network side is "required", the receiver UE performs integrity security protection check on the message #a, that is, checks whether the MAC obtained through calculation by the receiver UE is the same as the MAC carried in the received message #a; or when the integrity security policy #a configured on the network side is "not required", the receiver UE does not perform integrity security protection check on the message #a.

In another implementation, the receiver UE determines, according to the security policy #a and the confidentiality security protection indication and the integrity security protection indication that are carried in the message #a, whether to perform security deprotection on the message #a.

For example, the receiver UE may check whether the confidentiality security protection indication (for example, the PGK ID, the PTK ID, the counter, and the indication information #a) and the integrity security protection indication (for example, the MAC) that are carried in the message #a match the security policy #a configured on the network side. To be specific, the receiver UE checks whether the indication of confidentiality security protection indicated by the values of the PGK ID, the PTK ID, and the counter carried in the message #a matches the indication of confidentiality security protection indicated by the configured confidentiality security policy #a, and the receiver UE checks whether the indication of integrity security protection indicated by the value of the MAC carried in the message #a matches the indication of integrity security protection indicated by the configured integrity security policy #a.

For example, when the integrity security policy #a configured on the network side indicates that the integrity security protection is required (for example, the value is 1), it indicates that the transmitter UE performs integrity security protection on the message #a. If the value of the MAC carried in the message #a is not 0, it indicates that the integrity security protection indication (for example, the MAC) carried in the message #a matches the integrity security policy #a configured on the network side. On the contrary, if the value of the MAC carried in the message #a is 0, it indicates that the integrity security protection indication carried in the message #a does not match the integrity security policy #a configured on the network side.

For example, when the integrity security policy #a configured on the network side indicates that the integrity security protection is not required (for example, the value is 0), it indicates that the transmitter UE does not perform integrity security protection on the message #a. If the value of the MAC carried in the message #a is 0, it indicates that the integrity security protection indication (for example, the MAC) carried in the message #a matches the integrity security policy #a configured on the network side. On the contrary, if the value of the MAC carried in the message #a is not 0, it indicates that the integrity security protection indication carried in the message #a does not match the integrity security policy #a configured on the network side. Alternatively, in this case, the receiver UE may not consider the value of the MAC, but determine, according to the integrity security policy #a, whether to perform security deprotection on the message #a.

For example, when the confidentiality security policy #a configured on the network side indicates that the confidentiality security protection is required (for example, the value is 1), it indicates that the transmitter UE performs confidentiality security protection on the message #a. If none of the values of the PGK ID, the PTK ID, and the counter that are carried in the message #a is 0, and/or the value of the indication information #a carried in the message #a is 1, it indicates that the confidentiality security protection indication (for example, the PGK ID, the PTK ID, and the counter) carried in the message #a matches the confidentiality security policy #a configured on the network side. On the contrary, if all the values of the PGK ID, the PTK ID, and the counter that are carried in the message #a are 0, and/or the value of the indication information #a carried in the message #a is 0, it indicates that the confidentiality security protection indication carried in the message #a does not match the confidentiality security policy #a configured on the network side.

For example, when the confidentiality security policy #a configured on the network side indicates that the confidentiality security protection is not required (for example, the value is 0), it indicates that the transmitter UE does not perform confidentiality security protection on the message #a. If all the values of the PGK ID, the PTK ID, and the counter that are carried in the message #a are 0, and/or the value of the indication information #a carried in the message #a is 0, it indicates that the confidentiality security protection indication (for example, the PGK ID, the PTK ID, and the counter) carried in the message #a matches the confidentiality security policy #a configured on the network side. On the contrary, if none of the values of the PGK ID, the PTK ID, and the counter that are carried in the message #a is 0, and/or the value of the indication information #a carried in the message #a is 1, it indicates that the confidentiality security protection indication carried in the message #a does not match the confidentiality security policy #a configured on the network side. Alternatively, in this case, the receiver UE may not consider the value of the confidentiality security protection indication, but determine, according to the confidentiality security policy #a, whether to perform security deprotection on the message #a.

For example, when the security policy #a configured on the network side indicates that security protection is optionally performed (for example, the value is "preferred"), it indicates that the transmitter UE optionally performs security protection on the message #a. In this case, regardless of the values of the confidentiality security protection indication (for example, the PGK ID, the PTK ID, and the counter) and the integrity security protection indication (for example, the MAC) that are carried in the message #a, the receiver UE may consider that the confidentiality security protection indication and the integrity security protection indication that are carried in the message #a match the security policy #a configured on the network side.

The receiver UE may determine whether to perform security deprotection on the message #a by determining whether the confidentiality security protection indication and the integrity security protection indication that are carried in the message #a match the security policy #a configured on the network side.

For example, if the confidentiality security protection indication and the integrity security protection indication that are carried in the message #a does not match the security policy #a configured on the network side, the receiver UE may discard the message #a. If the confidentiality security protection indication and the integrity security protection indication that are carried in the message #a match the security policy #a configured on the network side, the receiver UE may determine, according to the security policy #a configured on the network side and the confidentiality security protection indication and the integrity security protection indication that are carried in the message #a, whether to perform security deprotection on the message #a.

For example, when the value of the confidentiality security policy #a is "required", and the confidentiality security protection indication carried in the message #a, for example, all the values of the PGK ID, the PTK ID, and the counter are not 0 and/or the value of the indication information #a is 1, the receiver UE determines to decrypt the payload in the message #a. When the value of the confidentiality security policy #a is "not required", and the confidentiality security protection indication carried in the message #a, for example, all the values of the PGK ID, the PTK ID, and the counter are 0 and/or the value of the indication information #a is 0, the receiver UE determines not to decrypt the payload in the message #a. When the value of the confidentiality security policy #a is "preferred", and the confidentiality security protection indication carried in the message #a, for example, the value of the indication information #a is 1, the receiver UE determines to decrypt the payload in the message #a. When the value of the integrity security policy #a is "required", and the integrity security protection indication carried in the message #a, for example, all the values of the MAC are not 0, the receiver UE determines to perform integrity check on the payload in the message #a. When the value of the integrity security policy #a is "not required", and the integrity security protection indication carried in the message #a, for example, all the values of the MAC are not 0, the receiver UE determines to perform integrity check on the payload in the message #a. When the value of the integrity security policy #a is "preferred", and the integrity security protection indication carried in the message #a, for example, all the values of the MAC are 0, the receiver UE determines not to perform integrity check on the payload in the message #a. For specific implementations of decryption and integrity security protection check, refer to the related descriptions in step S290 of the method 200. For brevity, details are not described herein again.

According to the method disclosed in this application, the receiver UE determines, according to the security policy configured on the network side instead of merely based on the value of the parameter carried in the message #a, whether security deprotection needs to be performed on the message #a. This prevents an attacker from tampering with the message #a. The values of different parameters in the message #a are defined. This avoids a case in which integrity security protection check fails in a scenario in which the security policy indicates that the confidentiality security protection is not required but the integrity security protection is required. The value of the security policy is added, so that whether security protection of the message #a is enabled is more flexible.

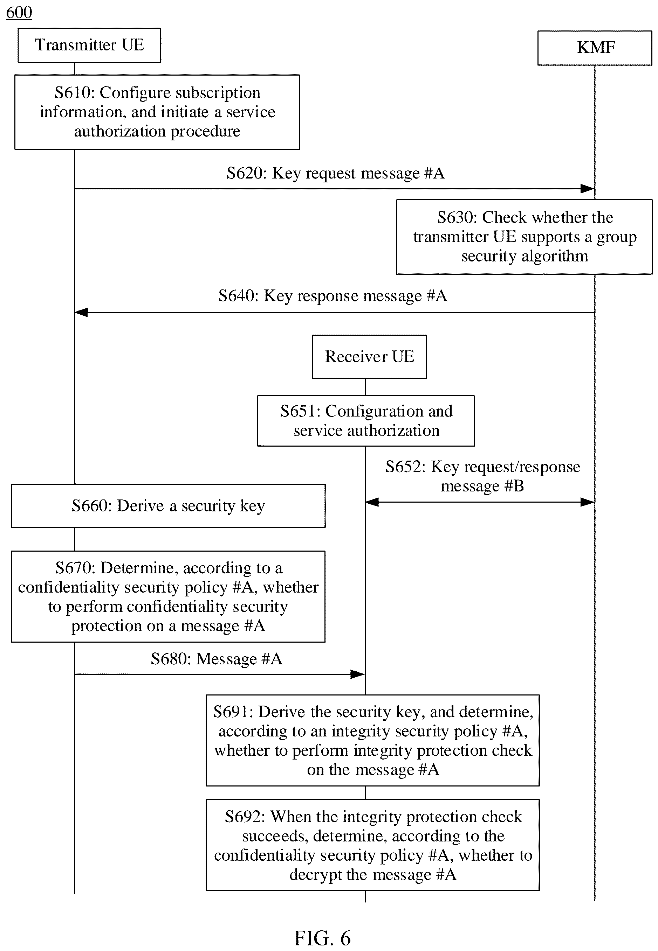

FIG. 6 is a schematic flowchart of a communication method 600 according to an embodiment of this application, and the method is for security of one-to-many communication (a broadcast or multicast scenario). In comparison with the method 500, in the method 600, whether to perform integrity security protection on a message #A is determined by an integrity security policy #A configured on a network side, and whether to perform confidentiality security protection on the message #A is determined by transmitter UE according to both a confidentiality security policy #A configured on the network side and a local policy #A. As shown in FIG. 6, the method includes the following plurality of steps. For a part that is not described in detail, refer to the method 200 to the method 500 or an existing protocol.

S610: Transmitter UE configures subscription information, and the transmitter UE initiates a service authorization procedure.

For example, the transmitter UE obtains a parameter #A required for one-to-many communication, where the parameter #A includes one or more of a group identifier, a security policy #A, and an address of a KMF. The security policy #A mainly includes a confidentiality security policy #A and an integrity security policy #A, and indicates whether security protection is required at a transport layer. For example, a value of the confidentiality security policy #A may include "required", "not required", or "preferred", and a value of the integrity security policy #A may include "required" or "not required". In other words, when the value of the confidentiality security policy #A is "preferred", the transmitter UE optionally performs confidentiality security protection on a to-be-sent message #A. In other words, the transmitter UE may perform confidentiality security protection on the message #A, or may not perform confidentiality security protection on the message #A, to meet flexibility requirements of different transmitter UEs.

S620: The transmitter UE sends a key request message #A to the KMF. Correspondingly, the KMF receives the key request message #A from the transmitter UE.

S630: The KMF checks whether the transmitter UE supports a group security algorithm.

S640: The KMF sends a key response message #A to the transmitter UE. Correspondingly, the transmitter UE receives the key response message #A from the KMF.

S651: Receiver UE performs configuration and service authorization.

S652: The receiver UE sends a key request message #B to the KMF. Correspondingly, the KMF receives the key request message #B from the receiver UE. Further, the KMF sends a key response message #B to the receiver UE. Correspondingly, the receiver UE receives the key response message #B from the KMF.

S660: The transmitter UE derives a security key, for example, one or more of a PTK, a PIK, and a PEK, or another key used for confidentiality protection and/or integrity protection. This is not specifically limited in this application.

For specific implementations of steps S610 to S660 and content or explanations of exchanged messages, refer to the related descriptions in steps S510 to S560 of the method 600. For brevity, details are not described herein again. A difference lies in that, in the method 700, the value of the confidentiality security policy #A may include "required", "not required", or "preferred", and the value of the integrity security policy #A may include "required" or "not required".

S670: The transmitter UE determines, according to the confidentiality security policy #A, whether to perform confidentiality security protection on the message #A.

In an implementation, when the confidentiality security policy #A configured on the network side is "required" or "not required", the transmitter UE may determine, according to the confidentiality security policy #A, whether to encrypt the message #A.

For example, when the confidentiality security policy #A is "not required", the transmitter UE does not perform confidentiality security protection on the message #A. Correspondingly, a PGK ID, a PTK ID, a counter, or confidentiality indication information in the message #A are all set to be 0. When the confidentiality security policy #A is "required", the transmitter UE performs confidentiality security protection on the message #A. Correspondingly, none of a PGK ID, a PTK ID, and a counter in the message #A is 0, and confidentiality indication information is set to 1. For a specific implementation in which the transmitter UE performs confidentiality security protection on the message #A, refer to the related descriptions in step S270 of the method 200. For brevity, details are not described herein again.

In this embodiment of this application, whether the values of the PGK ID, the PTK ID, and the counter in the message #A are 0 is no longer completely bound to whether the confidentiality security protection is enabled. In other words, when the confidentiality security protection is not enabled (or disabled), the confidentiality indication information may be used for indication or determining. Correspondingly, the values of the PGK ID, the PTK ID, and the counter may be 0 or may be not 0. This is not specifically limited in this application. When the confidentiality security protection is enabled, the confidentiality indication information may also be used for indication or determining. Correspondingly, the values of the PGK ID, the PTK ID, and the counter may be not 0.

In another implementation, the transmitter UE determines, according to the confidentiality security policy #A and a local policy #A, whether to perform confidentiality security protection on the message #A.

The local policy #A may indicate a trigger condition for the transmitter UE to perform security protection on the message #A. For a specific example, refer to the related descriptions of the method 600. Details are not described herein again. Optionally, the local policy #A may be preconfigured in step S610, or may be received from the network side. For example, the local policy #A is received from the KMF or a network management function network element.

For example, when the confidentiality security policy #A configured on the network side is "preferred", it indicates that the transmitter UE optionally performs confidentiality security protection on the message #A. Further, the transmitter UE may determine, according to the local policy #A, whether to perform confidentiality security protection. For example, when a UE type in the group is a roadside unit, the broadcast or multicast message #A has no confidentiality security protection requirement, and confidentiality security protection is not performed; or when a UE type in the group is a vehicle, the broadcast or multicast message #A has a confidentiality security protection requirement, and confidentiality security protection is performed.

Based on the foregoing two implementations, the transmitter UE may determine, according to the confidentiality security policy #A and the local policy #A, whether to perform confidentiality security protection on the message #A. Further, the transmitter UE may determine, according to the integrity security policy #A configured on the network side, whether to perform integrity security protection on the message #A. The value of the integrity security policy #A is "required" or "not required".

For example, when the integrity security policy #A configured on the network side is "required" or "not required", the transmitter UE may determine, according to the integrity security policy #A, whether to perform integrity security protection on the message #A. For example, when the integrity security policy #A is "not required", the transmitter UE does not perform integrity security protection on the message #A. Correspondingly, a value of a MAC in the message #A is not 0. When the integrity security policy #A is "required", the transmitter UE performs integrity security protection on the message #A. Correspondingly, all values of a MAC in the message #A are 0, or the to-be-sent message #A does not carry a MAC part. For a specific implementation in which the transmitter UE performs security protection on the message #A, refer to the related descriptions in step S570 of the method 600. For brevity, details are not described herein again.

S680: The transmitter UE sends the message #A. Correspondingly, the receiver UE receives the message #A from the transmitter UE.

For example, the transmitter UE sends the message #A through broadcast or multicast.

S691: The receiver UE derives the security key, and determines, according to the integrity security policy #A, whether to perform integrity protection check on the message #A.

For a specific implementation in which the receiver UE derives the security key (for example, the PTK, the PIK, or the PEK), refer to the related descriptions in step S590 of the method 600. For brevity, details are not described herein again.

For example, the receiver UE locally searches for the corresponding security policy #A based on the group ID carried in the received message #A and the key response message #B received in steps S651 and S652. Optionally, when the receiver UE does not find the security policy #A corresponding to the group ID, optionally, the receiver UE may send a request message to the network side (for example, a PKM), to obtain the security policy #A corresponding to the group ID; or the receiver UE may alternatively choose to discard the received message #A. This is not specifically limited in this application.

For example, when the integrity security policy #A configured on the network side is "required", the receiver UE performs integrity protection check on the message #A, that is, checks whether the MAC is correct. For specific implementations of decryption and integrity security protection check, refer to the related descriptions in step S290 of the method 200. For brevity, details are not described herein again. When the integrity security policy #A configured on the network side is "not required", the receiver UE does not perform integrity protection check on the message #A.

S692: When the integrity protection check succeeds, the receiver UE determines, according to the confidentiality security policy #A, whether to decrypt the message #A.

In an implementation, when the confidentiality security policy #A configured on the network side is "required", the receiver UE decrypts ciphertext of a payload in the message #A; when the value of the confidentiality security policy #A configured on the network side is "not required", the receiver UE does not decrypt ciphertext of a payload in the message #A; or when the value of the confidentiality security policy #A configured on the network side is "preferred", the receiver UE optionally decrypts ciphertext of a payload in the message #A.

In another implementation, the receiver UE determines, according to the confidentiality security policy #A and a confidentiality security protection indication carried in the message #A, whether to decrypt the message #A.

Specifically, the receiver UE may first determine whether the confidentiality security protection indication (for example, the PGK ID, the PTK ID, the counter, and the confidentiality indication information) carried in the message #A matches the confidentiality security policy #A configured on the network side. To be specific, the receiver UE checks whether the indication of confidentiality security protection indicated by the values of the PGK ID, the PTK ID, and the counter or the value of the confidentiality indication information carried in the message #A matches the indication of confidentiality security protection indicated by the configured confidentiality security policy #A. For a specific implementation of determining whether the two indicated cases match, refer to the related descriptions in step S590 of the method 600. For brevity, details are not described herein again.

Further, if the two indicated cases match, the receiver UE determines, based on the values of the PTK ID, the PGK ID, and the counter or the value of the confidentiality indication information carried in the message #A, whether to decrypt the payload field in the message #A.

For example, when the confidentiality security protection indication carried in the message #A includes the PTK ID, the PGK ID, and the counter, but does not include the confidentiality indication information, if all the values of the PTK ID, the PGK ID, and the counter are 0, it indicates that the transmitter UE performs confidentiality security protection on the message #A, and the receiver UE does not decrypt the ciphertext of the payload in the message #A. On the contrary, if none of the values of the PTK ID, the PGK ID, and the counter is 0, the receiver UE may decrypt the ciphertext of the payload in the message #A.

For example, when the confidentiality security protection indication carried in the message #A includes the PTK ID, the PGK ID, the counter, and the confidentiality indication information, regardless of whether the values of the PTK ID, the PGK ID, and the counter are 0, the receiver UE may determine, based on the confidentiality indication information, whether to decrypt the ciphertext of the payload in the message #A. If the value of the confidentiality indication information is 0, the receiver UE may not decrypt the ciphertext of the payload in the message #A. On the contrary, if the value of the confidentiality indication information is 1, the receiver UE may decrypt the ciphertext of the payload in the message #A.

According to the method disclosed in this application, the transmitter UE determines, according to the confidentiality security policy #A and the local policy #A, whether to enable confidentiality security protection, so that a confidentiality security mechanism is more flexible, and overheads of a transmit end and a receive end are reduced.

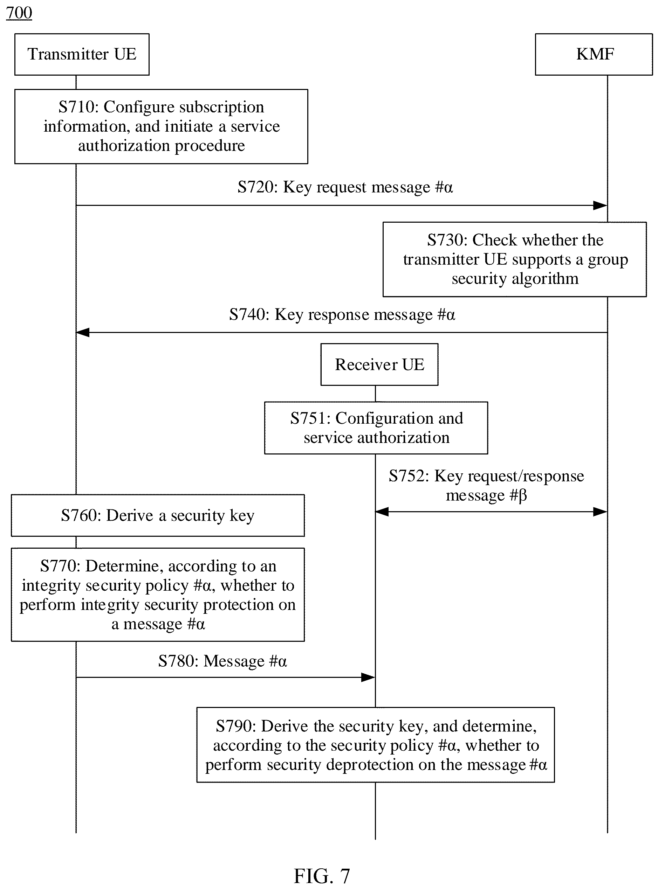

FIG. 7 is a schematic flowchart of a communication method 700 according to an embodiment of this application, and the method is for security of one-to-many communication (a broadcast or multicast scenario). In comparison with the method 600, in the method 700, whether to perform confidentiality security protection on a message #A is determined by a confidentiality security policy #A configured on a network side, and whether to perform integrity security protection on the message #A is determined by transmitter UE according to both an integrity security policy #A configured on the network side and a local policy #A. As shown in FIG. 7, the method includes the following plurality of steps. For a part that is not described in detail, refer to the method 200 to the method 600 or an existing protocol.

S710: Transmitter UE configures subscription information, and the transmitter UE initiates a service authorization procedure.

For example, the transmitter UE obtains a parameter #α required for one-to-many communication, where the parameter #α includes one or more of a group identifier, a security policy #α, and an address of a KMF. The security policy #α mainly includes a confidentiality security policy #α and an integrity security policy #α, and indicates whether security protection is required at a transport layer. For example, a value of the confidentiality security policy #α may include "required" or "not required", and a value of the integrity security policy #α may include "required", "not required", or "preferred". In other words, when the value of the integrity security policy #α is "preferred", the transmitter UE optionally performs integrity security protection on a to-be-sent message #α. In other words, the transmitter UE may perform integrity security protection on the message #α, or may not perform integrity security protection on the message #α, to meet flexibility requirements of different transmitter UEs.

S720: The transmitter UE sends a key request message #α to the KMF. Correspondingly, the KMF receives the key request message #α from the transmitter UE.

S730: The KMF checks whether the transmitter UE supports a group security algorithm.

S740: The KMF sends a key response message #α to the transmitter UE. Correspondingly, the transmitter UE receives the key response message #α from the KMF.

S751: Receiver UE performs configuration and service authorization.

S752: The receiver UE sends a key request message #β to the KMF. Correspondingly, the KMF receives the key request message #β from the receiver UE. Further, the KMF sends a key response message #β to the receiver UE. Correspondingly, the receiver UE receives the key response message #β from the KMF.

S760: The transmitter UE derives a security key, for example, one or more of a PTK, a PIK, and a PEK, or another key used for confidentiality protection and/or integrity protection. This is not specifically limited in this application.

For specific implementations of steps S710 to S760 and content or explanations of exchanged messages, refer to the related descriptions in steps S610 to S660 of the method 600. For brevity, details are not described herein again. A difference lies in that, in the method 700, the value of the integrity security policy #α may include "required", "not required", or "preferred", and the value of the confidentiality security policy #α may include "required" or "not required".

S770: The transmitter UE determines, according to the integrity security policy #α, whether to perform integrity security protection on the message #α.

In an implementation, when the integrity security policy #α configured on the network side is "required" or "not required", the transmitter UE may determine, according to the integrity security policy #α, whether to integrity check the message #α.

For example, when the integrity security policy #α is "not required", the transmitter UE does not perform integrity security protection on the message #α. Correspondingly, all values of a MAC in the message #α are set to be 0. When the integrity security policy #α is "required", the transmitter UE performs integrity security protection on the message #α. Correspondingly, a value of a MAC in the message #α is not 0. For a specific implementation in which the transmitter UE performs integrity security protection on the message #α, refer to the related descriptions in step S270 of the method 200. For brevity, details are not described herein again.

In another implementation, the transmitter UE determines, according to the integrity security policy #α and a local policy #α, whether to perform integrity security protection on the message #α.

The local policy #α may indicate a trigger condition for the transmitter UE to perform security protection on the message #α. For a specific example, refer to the related descriptions of the method 500. Details are not described herein again. Optionally, the local policy #α may be preconfigured in step S710, or may be received from the network side. For example, the local policy #α is received from the KMF or a network management function network element.

For example, when the integrity security policy #α configured on the network side is "preferred", it indicates that the transmitter UE optionally performs integrity security protection on the message #α. Further, the transmitter UE may determine, according to the local policy #α, whether to perform integrity security protection. For example, when a UE type in the group is a roadside unit, the broadcast or multicast message #α has no integrity security protection requirement, and integrity security protection is not performed; or when a UE type in the group is a vehicle, the broadcast or multicast message #α has an integrity security protection requirement, and integrity security protection is performed.

Based on the foregoing two implementations, the transmitter UE may determine, according to the integrity security policy #α and the local policy #α, whether to perform integrity security protection on the message #α.

In addition, the transmitter UE may determine, according to the confidentiality security policy #α configured on the network side, whether to perform confidentiality security protection on the message #α. The value of the confidentiality security policy #α is "required" or "not required". For example, when the confidentiality security policy #α configured on the network side is "required" or "not required", the transmitter UE may determine, according to the confidentiality security policy #α, whether to perform confidentiality security protection on the message #α. For example, when the confidentiality security policy #α is "not required", the transmitter UE does not perform confidentiality security protection on the message #α. Correspondingly, the value of the MAC in the message #α is not 0. When the confidentiality security policy #α is "required", the transmitter UE performs confidentiality security protection on the message #α. Correspondingly, all the values of the MAC in the message #α are 0. For a specific implementation in which the transmitter UE performs security protection on the message #α, refer to the related descriptions in step S570 of the method 500. For brevity, details are not described herein again.

S780: The transmitter UE sends the message #α. Correspondingly, the receiver UE receives the message #α from the transmitter UE.

For example, the transmitter UE sends the message #α through broadcast or multicast.

S790: The receiver UE derives the security key, and determines, according to the security policy #α, whether to perform security deprotection on the message #α.

For specific implementations of decryption and integrity security protection check included in the security deprotection, refer to the related descriptions in step S290 of the method 200. For brevity, details are not described herein again. For a specific implementation in which the receiver UE derives the security key (for example, the PTK, the PIK, or the PEK), refer to the related descriptions in step S590 of the method 500. For brevity, details are not described herein again.

For example, the receiver UE locally searches for the corresponding security policy #α based on the group ID carried in the received message #α and the key response message #β received in steps S751 and S752. Optionally, when the receiver UE does not find the security policy #α corresponding to the group ID, optionally, the receiver UE may send a request message to the network side (for example, a PKM), to obtain the security policy #α corresponding to the group ID; or the receiver UE may alternatively choose to discard the received message #α. This is not specifically limited in this application.

For example, when the confidentiality security policy #α configured on the network side is "required", the receiver UE decrypts ciphertext of a payload in the message #α. When the value of the confidentiality security policy #α configured on the network side is "not required", the receiver UE does not decrypt ciphertext of a payload in the message #α.

For example, when the confidentiality security policy #α configured on the network side is "not required", if all values of a PTK ID, a PGK ID, and a counter that are carried in the message #α are 0 or a value of confidentiality indication information carried in the message #α is 0, the receiver UE does not decrypt the ciphertext of the payload in the message #a; or if a value of confidentiality indication information carried in the message #α is 1, the receiver UE may discard the message #α, or consider that the ciphertext of the payload in the message #α fails to be decrypted.

For example, when the confidentiality security policy #α configured on the network side is "required", if a confidentiality security protection indication carried in the message #α includes the PTK ID, the PGK ID, the counter, and the confidentiality indication information, regardless of whether the values of the PTK ID, the PGK ID, and the counter are 0, the receiver UE may determine, based on the confidentiality indication information, whether to decrypt the ciphertext of the payload in the message #α.

For example, when the integrity security policy #α configured on the network side is "required", the receiver UE performs integrity protection check on the message #α, that is, checks whether the MAC is correct. When the integrity security policy #α configured on the network side is "not required", the receiver UE does not perform integrity protection check on the message #α. When the integrity security policy #α configured on the network side is "preferred", the receiver UE optionally performs integrity protection check on the message #α. For example, the receiver UE determines, based on a value of the MAC carried in the message #α, whether to perform integrity protection verification.

Specifically, the receiver UE may first determine whether a value of integrity security protection (for example, the PGK ID, the PTK ID, the counter, and the confidentiality indication information) carried in the message #α matches the integrity security policy #α configured on the network side. To be specific, the receiver UE checks whether the value of the MAC carried in the message #α is the same as the value of the MAC obtained through calculation by using a configured integrity algorithm. If the values of the MAC are the same, the integrity check succeeds. If the values of the MAC are different, the integrity check fails. For a specific implementation of determining whether the integrity security protection indication matches the integrity security policy #α, refer to the related descriptions in step S590 of the method 500. For brevity, details are not described herein again.

According to the method disclosed in this application, the receiver UE determines, according to the security policy configured on the network side instead of merely based on the value of the parameter carried in the message #a, whether security deprotection needs to be performed on the message #a. This prevents an attacker from tampering with the message #a. The values of different parameters in the message #a are defined. This avoids a case in which integrity security protection check fails in a scenario in which the security policy indicates that the confidentiality security protection is not required but the integrity security protection is required. The value of the security policy is added, so that whether security protection of the message #a is enabled is more flexible.

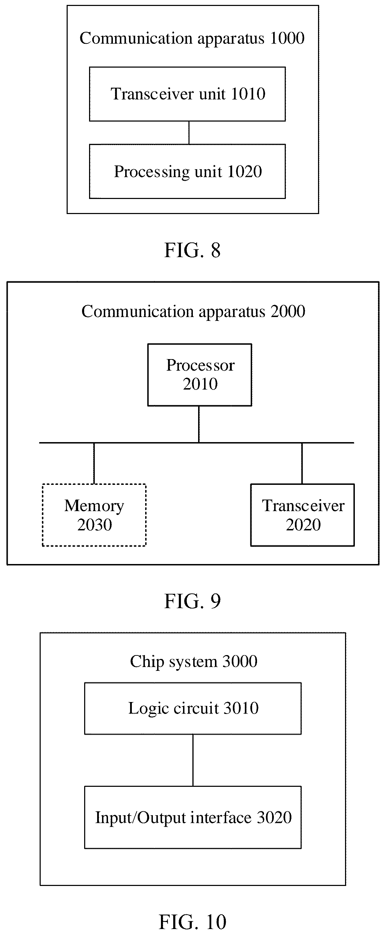

The foregoing describes in detail embodiments on a communication method side of this application with reference to FIG. 1 to FIG. 7. The following describes in detail embodiments on a communication apparatus side of this application with reference to FIG. 8 and FIG. 9. It should be understood that descriptions of the apparatus embodiments correspond to the descriptions of the method embodiments. Therefore, for a part that is not described in detail, refer to the foregoing method embodiments.

FIG. 8 is a block diagram of a communication apparatus 1000 according to an embodiment of this application. As shown in FIG. 8, the device 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the device 1000 may implement the steps or procedures performed by the first communication apparatus in the foregoing method embodiments. The processing unit 1020 is configured to perform the processing-related operations of the first communication apparatus in the foregoing method embodiments. The transceiver unit 1010 is configured to perform the receiving/sending-related operations of the first communication apparatus in the foregoing method embodiments.

In another possible design, the device 1000 may implement the steps or procedures performed by the second communication apparatus in the foregoing method embodiments. The processing unit 1020 is configured to perform processing-related operations performed by the second communication apparatus in the foregoing method embodiments. The transceiver unit 1010 is configured to perform receiving/sending-related operations performed by the second communication apparatus in the foregoing method embodiments.

It should be understood that the device 1000 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically the transmit end in the foregoing embodiments, and may be configured to perform the procedures and/or steps corresponding to the transmit end in the foregoing method embodiments; or the device 1000 may be specifically the receive end in the foregoing embodiments, and may be configured to perform the procedures and/or steps corresponding to the receive end in the foregoing method embodiments. To avoid repetition, details are not described herein again.

The device 1000 in the foregoing solutions has a function of implementing the corresponding steps performed by the transmit end in the foregoing methods. Alternatively, the device 1000 in the foregoing solutions has a function of implementing the corresponding steps performed by the receive end in the foregoing methods. The function may be implemented by hardware or may be implemented by executing corresponding software by hardware. The hardware or software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver). Another unit, for example, a processing unit, may be replaced with a processor to separately perform sending and receiving operations and a related processing operation in each method embodiment.

In addition, the transceiver unit may alternatively be a transceiver circuit (for example, may include a receiving circuit and a sending circuit), and the processing unit may be a processing circuit. In embodiments of this application, the apparatus in FIG. 8 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 9 is a block diagram of a communication apparatus 2000 according to an embodiment of this application. As shown in FIG. 9, the device 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the device 2000 may further include a memory 2030. The memory 2030 communicates with the processor 2010 and the transceiver 2020 through the internal connection path. The memory 2030 is configured to store instructions, and the processor 2010 may execute the instructions stored in the memory 2030.

In a possible implementation, the device 2000 is configured to implement the procedures and steps corresponding to the first communication apparatus in the foregoing method embodiments.

In another possible implementation, the device 2000 is configured to implement the procedures and steps corresponding to the second communication apparatus in the foregoing method embodiments.

It should be understood that the device 2000 may be specifically the transmit end or the receive end in the foregoing embodiments, or may be a chip or a chip system. Correspondingly, the transceiver 2020 may be a transceiver circuit of the chip. This is not limited herein. Specifically, the device 2000 may be configured to perform the steps and/or procedures corresponding to the transmit end or the receive end in the foregoing method embodiments.

Optionally, the memory 2030 may include a read-only memory and a random access memory, and provide instructions and data for the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

In an implementation process, the steps in the foregoing methods can be implemented by using a hardware integrated logical circuit in the processor or by using instructions in a form of software. The steps of the method disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logical circuit in the processor or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not a limitative description, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory of the systems and methods described in this specification includes but is not limited to these memories and any memory of another proper type.

FIG. 10 is a diagram of a chip system 3000 according to an embodiment of this application. As shown in FIG. 10, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 can implement the methods and functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by the first communication apparatus in the foregoing method embodiments.

In another solution, the chip system 3000 is configured to implement operations performed by the second communication apparatus in the foregoing method embodiments.

An embodiment of this application further provides a computer-readable storage medium. The computer-readable storage medium stores computer instructions used to implement the methods performed by the devices (for example, the first communication apparatus, the second communication apparatus, and the key management network element) in the foregoing method embodiments.

An embodiment of this application further provides a computer program product including instructions. When the instructions are executed by a computer, the computer is enabled to implement the methods performed by the devices (for example, the first communication apparatus, the second communication apparatus, and the key management network element) in the foregoing method embodiments.

An embodiment of this application further provides a communication system, including one or more of the foregoing first communication apparatus, second communication apparatus, and key management network element.

For explanations and beneficial effect of related content in any one of the apparatuses provided above, refer to the corresponding method embodiments provided above. Details are not described herein again.

A person of ordinary skill in the art may be aware that units and algorithm steps in the examples described with reference to embodiments disclosed in this specification can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for ease and brevity of description, for a detailed working process of foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or a part of the steps of the methods in embodiments of this application. The foregoing storage medium includes any medium that can store program code, for example, a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first communication apparatus, a security policy corresponding to a proximity-based services group, wherein the security policy comprises a confidentiality security policy and/or an integrity security policy, the confidentiality security policy indicates whether confidentiality security protection is enabled for a message of the proximity-based services group, the integrity security policy indicates whether integrity security protection is enabled for the message of the proximity-based services group, the proximity-based services group comprises at least two members, and the first communication apparatus is one of the at least two members;
determining, by the first communication apparatus according to the security policy, whether to perform security protection on a payload field carried in a to-be-sent first message, and assigning a value to a field other than the payload field in the first message, wherein the field other than the payload field comprises one or more of the following: an identifier of a proximity-based services group key, an identifier of a proximity-based services group traffic key, a freshness parameter, confidentiality indication information, integrity indication information, or a message authentication code MAC, the confidentiality indication information indicates whether the confidentiality security protection is enabled, the integrity indication information indicates whether the integrity security protection is enabled, and the security protection comprises the confidentiality security protection and/or the integrity security protection; and
sending, by the first communication apparatus, the first message to a second communication apparatus.

2. The method according to claim 1, wherein the assigning the value to the field other than the payload field in the first message comprises:
when the confidentiality security policy indicates that the confidentiality security protection is not enabled, but the integrity security policy indicates that the integrity security protection is enabled, setting, by the first communication apparatus, the MAC not to be 0, and setting at least one of the identifier of the proximity-based services group key, the identifier of the proximity-based services group traffic key, and the freshness parameter not to be 0.

3. The method according to claim 1 or 2, wherein the assigning the value to the field other than the payload field in the first message comprises:
when the confidentiality security policy indicates that the confidentiality security protection is not enabled, but the integrity security policy indicates that the integrity security protection is enabled, setting, by the first communication apparatus, the confidentiality indication information to be 0.

4. The method according to claim 1, wherein the determining, by the first communication apparatus according to the security policy, whether to perform security protection on the payload field carried in the to-be-sent first message, and assigning the value to the field other than the payload field in the first message comprise one or more of the following:
when the confidentiality security policy indicates that the confidentiality security protection is enabled, determining, by the first communication apparatus, to perform confidentiality security protection on the payload field carried in the to-be-sent first message, and setting a value of at least one of the identifier of the proximity-based services group key, the identifier of the proximity-based services group traffic key, the freshness parameter, and the confidentiality indication information that are carried in the first message not to be 0;
when the integrity security policy indicates that the integrity security protection is enabled, determining, by the first communication apparatus, to perform integrity security protection on the payload field carried in the to-be-sent first message, and setting a value of the MAC carried in the first message not to be 0;
when the confidentiality security policy indicates that the confidentiality security protection is not enabled, determining, by the first communication apparatus, not to perform confidentiality security protection on the payload field carried in the to-be-sent first message, and setting a value of at least one of the identifier of the proximity-based services group key, the identifier of the proximity-based services group traffic key, the freshness parameter, and the confidentiality indication information that are carried in the first message to be 0; or
when the integrity security policy indicates that the integrity security protection is not enabled, determining, by the first communication apparatus, not to perform integrity security protection on the payload field carried in the to-be-sent first message, and setting a value of the MAC carried in the first message to be 0.

5. The method according to any one of claims 1 to 4, wherein the determining, by the first communication apparatus according to the security policy, whether to perform security protection on the payload field carried in the to-be-sent first message, and assigning the value to the field other than the payload field in the first message comprise:
determining, by the first communication apparatus according to a local policy and the security policy, to perform security protection on the payload field carried in the first message, and assigning the value to the field other than the payload field in the first message, wherein the local policy indicates a trigger condition for the first communication apparatus to perform security protection on the payload field.

6. The method according to claim 5, wherein the determining, by the first communication apparatus according to the local policy and the security policy, to perform security protection on the payload field, and assigning the value to the field other than the payload field in the first message comprise:
when the security policy indicates that the security protection is optionally enabled, determining, by the first communication apparatus according to the local policy, to perform security protection on the payload field, and assigning the value to the field other than the payload field in the first message.

7. The method according to claim 5 or 6, wherein the determining, by the first communication apparatus according to the local policy and the security policy, to perform security protection on the payload field, and assigning the value to the field other than the payload field in the first message comprise one or more of the following:
when the confidentiality security policy indicates that the confidentiality security protection is optionally enabled, and a type of the first communication apparatus is a roadside unit, determining, by the first communication apparatus, not to perform confidentiality security protection on the payload field, and setting a value of the confidentiality indication information carried in the field other than the payload field to be 0, or setting the at least one of the identifier of the proximity-based services group key, the identifier of the proximity-based services group traffic key, and the freshness parameter to be 0; or
when the confidentiality security policy indicates that the confidentiality security protection is optionally enabled, and a type of the first communication apparatus is a vehicle, determining, by the first communication apparatus, to perform confidentiality security protection on the payload field, and setting a value of the confidentiality indication information carried in the field other than the payload field not to be 0, or setting the at least one of the identifier of the proximity-based services group key, the identifier of the proximity-based services group traffic key, and the freshness parameter not to be 0.

8. The method according to claim 1, wherein the determining, by the first communication apparatus according to the security policy, whether to perform security protection on the payload field carried in the to-be-sent first message, and assigning the value to the field other than the payload field in the first message comprise:
when the confidentiality security policy indicates that the confidentiality security protection is not enabled, and the integrity security policy indicates that the integrity security protection is not enabled, setting, by the first communication apparatus, at least one of the identifier of the proximity-based services group key, the identifier of the proximity-based services group traffic key, and the freshness parameter not to be 0.

9. The method according to any one of claims 1 to 8, wherein the confidentiality indication information is carried in an information header of a packet data convergence protocol PDCP data packet of the first communication apparatus.

10. The method according to any one of claims 1 to 9, wherein the obtaining, by the first communication apparatus, the security policy corresponding to the proximity-based services group comprises:
sending, by the first communication apparatus, a request message to a key management function network element, wherein the request message comprises a group identifier of the proximity-based services group and a security capability of the first communication apparatus, and the request message is used to request to obtain the security policy associated with the group identifier; and
receiving, by the first communication apparatus, the security policy from the key management function network element.

11. A communication method, comprising:
receiving, by a second communication apparatus, a first message from a first communication apparatus, wherein the first message comprises a payload field and a field other than the payload field, the field other than the payload field comprises one or more of the following: an identifier of a proximity-based services group key, an identifier of a proximity-based services group traffic key, a freshness parameter, confidentiality indication information, integrity indication information, or a message authentication code MAC, wherein the confidentiality indication information indicates whether confidentiality security protection is enabled, and the integrity indication information indicates whether integrity security protection is enabled; and
determining, by the second communication apparatus according to a security policy corresponding to a proximity-based services group, whether to perform security deprotection on the payload field, wherein the security policy comprises a confidentiality security policy and/or an integrity security policy, the confidentiality security policy indicates whether the confidentiality security protection is enabled for a message of the proximity-based services group, the integrity security policy indicates whether the integrity security protection is enabled for the message of the proximity-based services group, the proximity-based services group comprises at least two members, the second communication apparatus is one of the at least two members, and the security deprotection comprises decryption and/or integrity check.

12. The method according to claim 11, wherein the determining, by the second communication apparatus according to the security policy corresponding to the proximity-based services group, whether to perform security deprotection on the payload field comprises one or more of the following:
when the confidentiality security policy indicates that the confidentiality security protection is enabled, determining, by the second communication apparatus, to decrypt the payload field;
when the integrity security policy indicates that the integrity security protection is enabled, determining, by the second communication apparatus, to perform integrity check on the payload field;
when the confidentiality security policy indicates that the confidentiality security protection is not enabled, determining, by the second communication apparatus, not to decrypt the payload field; or
when the integrity security policy indicates that the integrity security protection is not enabled, determining, by the second communication apparatus, not to perform integrity check on the payload field.

13. The method according to claim 11 or 12, wherein the determining, by the second communication apparatus according to the security policy corresponding to the proximity-based services group, whether to perform security deprotection on the payload field comprises:
determining, by the second communication apparatus according to the security policy and the field other than the payload field, whether to perform security deprotection on the payload field.

14. The method according to claim 13, wherein the determining, by the second communication apparatus according to the security policy and the field other than the payload field, whether to perform security deprotection on the payload field comprises:
when the integrity security policy indicates that the integrity security protection is enabled, and the field other than the payload field does not carry the MAC or a value of the MAC carried in the field other than the payload field is 0, determining, by the second communication apparatus, that the integrity check on the payload field fails, or discarding, by the second communication apparatus, the first message.

15. The method according to claim 13 or 14, wherein the determining, by the second communication apparatus according to the security policy and the field other than the payload field, whether to perform security deprotection on the payload field comprises:
when the integrity security policy indicates that the integrity security protection is enabled, and the value of the MAC carried in the field other than the payload field is not 0, determining, by the second communication apparatus, to perform integrity check on the payload field.

16. The method according to any one of claims 13 to 15, wherein the determining, by the second communication apparatus according to the security policy and the field other than the payload field, whether to perform security deprotection on the payload field comprises:
when the integrity security policy indicates that the integrity security protection is not enabled, and the value of the MAC carried in the field other than the payload field is not 0, determining, by the second communication apparatus, not to perform integrity check on the payload field.

17. The method according to any one of claims 13 to 16, wherein the determining, by the second communication apparatus according to the security policy and the field other than the payload field, whether to perform security deprotection on the payload field comprises:
when the integrity security policy indicates that the integrity security protection is not enabled, and the field other than the payload field does not carry the MAC or the value of the MAC carried in the field other than the payload field is 0, determining, by the second communication apparatus, not to perform integrity check on the payload field.

18. The method according to any one of claims 13 to 17, wherein the determining, by the second communication apparatus according to the security policy and the field other than the payload field, whether to perform security deprotection on the payload field comprises:
when the integrity security policy indicates that the integrity security protection is optionally enabled, and the value of the MAC carried in the field other than the payload field is not 0, determining, by the second communication apparatus, to perform integrity check on the payload field.

19. The method according to any one of claims 13 to 18, wherein the determining, by the second communication apparatus according to the security policy and the field other than the payload field, whether to perform security deprotection on the payload field comprises:
when the integrity security policy indicates that the integrity security protection is optionally enabled, and the field other than the payload field does not carry the MAC or the value of the MAC carried in the field other than the payload field is 0, determining, by the second communication apparatus, not to perform security protection on the payload field.

20. The method according to any one of claims 13 to 19, wherein the determining, by the second communication apparatus according to the security policy and the field other than the payload field, whether to perform security deprotection on the payload field comprises:
when the confidentiality security policy indicates that the confidentiality security protection is not enabled, and a value of at least one of the identifier of the proximity-based services group key, the identifier of the proximity-based services group traffic key, and the freshness parameter that are carried in the field other than the payload field is not 0, determining, by the second communication apparatus, not to decrypt the payload field.

21. The method according to any one of claims 13 to 20, wherein the determining, by the second communication apparatus according to the security policy and the field other than the payload field, whether to perform security deprotection on the payload field comprises:
when the confidentiality security policy indicates that the confidentiality security protection is not enabled, but the confidentiality indication information carried in the field other than the payload field indicates that the confidentiality security protection is enabled, determining, by the second communication apparatus, not to decrypt the payload field.

22. The method according to any one of claims 13 to 21, wherein the determining, by the second communication apparatus according to the security policy and the field other than the payload field, whether to perform security deprotection on the payload field comprises:
when the confidentiality security policy indicates that the confidentiality security protection is enabled, but the confidentiality indication information indicates that the confidentiality security protection is not enabled, determining, by the second communication apparatus, to decrypt the payload field.

23. The method according to any one of claims 13 to 22, wherein the determining, by the second communication apparatus according to the security policy and the field other than the payload field, whether to perform security deprotection on the payload field comprises:
when the confidentiality security policy indicates that the confidentiality security protection is optionally enabled, and the confidentiality indication information indicates that the confidentiality security protection is not enabled, determining, by the second communication apparatus, not to decrypt the payload field.

24. The method according to any one of claims 13 to 23, wherein the determining, by the second communication apparatus according to the security policy and the field other than the payload field, whether to perform security deprotection on the payload field comprises:
when the confidentiality security policy indicates that the confidentiality security protection is optionally enabled, and the confidentiality indication information indicates that the confidentiality security protection is enabled, determining, by the second communication apparatus, to decrypt the payload field.

25. The method according to any one of claims 13 to 24, wherein the confidentiality indication information is carried in an information header of a packet data convergence protocol PDCP data packet of the first communication apparatus.

26. The method according to any one of claims 13 to 25, wherein the method further comprises:
that the second communication apparatus obtains the security policy corresponding to the proximity-based services group is specifically:
sending, by the second communication apparatus, a request message to a key management function network element, wherein the request message comprises a group identifier of the proximity-based services group and a security capability of the second communication apparatus, and the request message is used to request to obtain the security policy associated with the group identifier; and
receiving, by the second communication apparatus, the security policy from the key management function network element.

27. A communication apparatus, comprising one or more functional modules, wherein the one or more functional modules are configured to perform the method according to any one of claims 1 to 10, or the one or more functional modules are configured to perform the method according to any one of claims 11 to 26.

28. A communication apparatus, comprising a processor, wherein the processor is coupled to a memory; and the processor is configured to: execute a computer program stored in the memory, to enable the apparatus to perform the method according to any one of claims 1 to 10, or execute a computer program stored in the memory, to enable the apparatus to perform the method according to any one of claims 10 to 26.

29. A computer-readable storage medium, wherein the computer-readable storage medium stores a computer program, and when the computer program is run, the computer is enabled to perform the method according to any one of claims 1 to 26.
